(19) **Europäisches Patentamt / European Patent Office / Office européen des brevets**

(11) **EP 4 595 772 A1**

(12) **EUROPEAN PATENT APPLICATION**
published in accordance with Art. 153(4) EPC

(43) Date of publication:
**06.08.2025 Bulletin 2025/32**

(21) Application number: **23871569.2**

(22) Date of filing: **21.08.2023**

(51) International Patent Classification (IPC):
**A23L 13/00** (2016.01)   **A23D 7/00** (2006.01)
**A23J 3/00** (2006.01)   **A23L 11/00** (2025.01)

(52) Cooperative Patent Classification (CPC):
**A23J 3/227; A23D 7/0053; A23L 29/04**

(86) International application number:
**PCT/JP2023/029984**

(87) International publication number:
**WO 2024/070327 (04.04.2024 Gazette 2024/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.09.2022 JP 2022158789**

(71) Applicant: FUJIFILM Corporation
Tokyo 106-8620 (JP)

(72) Inventors:
• **MATSUNO, Ryo**
  **Ashigarakami-gun, Kanagawa 258-8577 (JP)**
• **SUGIYAMA, Hiroyuki**
  **Ashigarakami-gun, Kanagawa 258-8577 (JP)**

(74) Representative: **HGF**
**HGF Limited**
**1 City Walk**
**Leeds LS11 9DX (GB)**

(54) **FAT-SIMULATING COMPOSITION, AND MEAT SUBSTITUTE**

(57)   Provided is a fat simulating composition containing an aqueous phase and an oil phase dispersed in the aqueous phase, in which a melting point or a crystallization temperature of the oil phase is in a range of from -20°C to 60°C, and an absolute value of a difference between a d-line refractive index of the aqueous phase and a d-line refractive index of the oil phase satisfies a relationship of $0.01 \leq |\text{oil phase refractive index} - \text{aqueous phase refractive index}| \leq 0.115$.

FIG.1

EXAMPLE 8 BEFORE HEATING    COMPARATIVE EXAMPLE 1 AFTER HEATING    EXAMPLE 2 AFTER HEATING

EXAMPLE 8 AFTER HEATING    COMPARATIVE EXAMPLE 2 AFTER HEATING

**EP 4 595 772 A1**

## Description

Technical Field

The present disclosure relates to a fat simulating composition and a meat alternative.

Background Art

Livestock meat is a food material widely consumed in large quantities in the world. In recent years, from the viewpoint of health maintenance and the like, attempts have been made to refrain from intake of livestock meat and to intake a meat-like food (hereinafter, also referred to as "meat alternative") using a vegetable protein derived from a plant such as soybean as a raw material. Accordingly, various developments have been carried out.
For example, Japanese Patent (JP-B) No. 6446473 proposes an oil-in-water composition containing at least an alkyl cellulose having a viscosity of from 4,000 to 11,000 mPa·s when measured in 1% by mass of an aqueous solution at 20°C by a B-type viscometer and a storage elastic modulus G' (65°C) of from 2,500 to 4,500 Pa when measured at 65°C in 1.5% by mass of an aqueous solution; edible oil and/or fat; and water, and a food obtained by using the oil-in-water composition.
International Patent Application Laid-Open (WO) No. 2013/190921 proposes an oil-in-water emulsion gel food obtained by gelling an oil-in-water emulsion slurry containing from 10 to 60 % by weight of oil droplets having a particle diameter of from 50 $\mu$m to 800 $\mu$m.

SUMMARY OF INVENTION

Technical Problem

The color of the appearance of livestock meat is changed by heating (that is, cooking). In the case of a fat portion (that is, fat), the fat portion exhibits white in a preserved state, but the color is changed from white to translucent by heating. Therefore, it is desirable that a meat-like food exhibits a color change similar to that of livestock meat by heating, because this reminds the consumer of the livestock meat. However, in the meat-like food according to the related art, even when heated, a portion corresponding to the fat portion may remain white. When heating does not cause a color change similar to that of livestock meat, a consumer feels uncomfortable when eating the heated meat-like food.
In order to solve the above-described problems, an embodiment of the disclosure is to provide a fat simulating composition that exhibits a color change simulating a fat portion of livestock meat before and after heating and exhibits a color simulating a fat portion of heated livestock meat after heating, and a meat alternative containing the fat simulating composition.

Solution to Problem

The present disclosure includes the following embodiments.

<1> A fat simulating composition containing an aqueous phase and an oil phase dispersed in the aqueous phase,

in which a melting point or a crystallization temperature of the oil phase is in a range of from -20°C to 60°C, and an absolute value of a difference between a d-line refractive index of the aqueous phase and a d-line refractive index of the oil phase satisfies a relationship of 0.01 ≤ |oil phase refractive index - aqueous phase refractive index| ≤ 0.115.

<2> The fat simulating composition according to <1>, in which the oil phase contains an oil and/or fat derived from vegetable.
<3> The fat simulating composition according to <1> or <2>, in which a solid content concentration of the aqueous phase is 10% by volume or more.
<4> The fat simulating composition according to any one of <1> to <3>, in which the aqueous phase contains at least one selected from a non-animal-derived edible resin, a protein, or a carbohydrate.
<5> The fat simulating composition according to any one of <1> to <4>, in which the aqueous phase contains at least one selected from edible additives having a solubility in water at 25°C of 1% by mass or more.
<6> The fat simulating composition according to <5>, in which the aqueous phase contains reduced starch syrup as the edible additive.
<7> The fat simulating composition according to any one of <1> to <6>, in which the oil phase is a granular material having a volume average particle diameter of 10 μm to 500 μm.

<8> The fat simulating composition according to any one of <1> to <7>, in which the d-line refractive index of the aqueous phase is smaller than the d-line refractive index of the oil phase.

<9> The fat simulating composition according to any one of <1> to <8>, in which a ratio of an oil phase volume to a total volume of the fat simulating composition is from 10% by volume to 70% by volume.

<10> The fat simulating composition according to any one of <1> to <9>, in which the fat simulating composition is a fat simulating structure.

<11> A meat alternative containing a lean-like portion containing a protein and the fat simulating composition according to <10>.

Advantageous Effects of Invention

According to an embodiment of the disclosure, it is possible to provide a fat simulating composition that exhibits a color change simulating a fat portion of livestock meat before and after heating and exhibits a color simulating a fat portion of heated livestock meat after heating, and a meat alternative containing the fat simulating composition.

BRIEF DESCRIPTION OF DRAWINGS

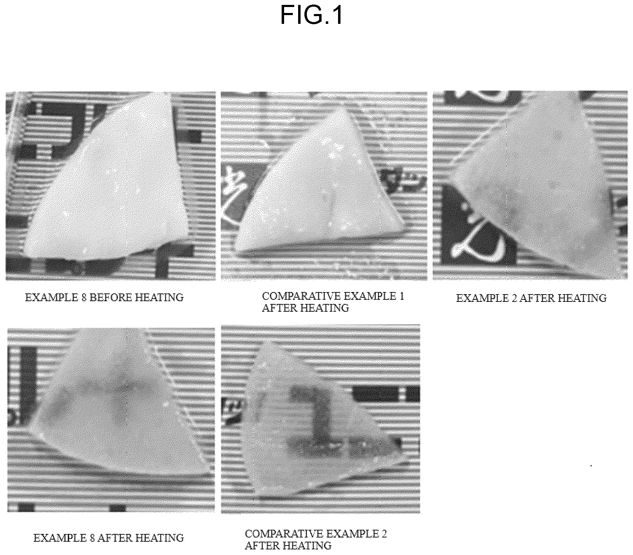

Fig. 1 illustrates photographs obtained by imaging states after heating in Examples 2 and 8 and Comparative Examples 1 and 2, and a state before heating in Example 8, respectively, in evaluation of transparency.

DESCRIPTION OF EMBODIMENTS

Hereinafter, embodiments that are examples of the present disclosure will be described. These descriptions and examples illustrate embodiments and do not limit the scope of the invention.

In the present disclosure, each numerical range specified using "(from)... to..." represents a range including the numerical values noted before and after "to" as the lower limit value and the upper limit value, respectively.

With regard to the stepwise numerical ranges described in the present disclosure, the upper limit value or the lower limit value described in a certain numerical range may be replaced with the upper limit value or the lower limit value of another stepwise numerical range. In the numerical ranges described in the present disclosure, upper limit values or lower limit values of a certain numerical value range may be replaced with values described in Examples.

In the present disclosure, each component may contain a plurality of corresponding substances.

In the present disclosure, in a case in which a plurality of substances corresponding to each component are present in a composition, unless otherwise specified, the amount of each component in the composition means the total amount of the plurality of substances present in the composition.

In the present disclosure, the term "step" includes not only an independent step, but also a step that can achieve a predetermined action of the step even in the case of being not clearly distinguished from other steps.

In the present disclosure, a combination of two or more preferred aspects is a more preferred aspect.

<Fat simulating composition>

A fat simulating composition according to the present disclosure contains an aqueous phase and an oil phase dispersed in the aqueous phase, in which a melting point or a **crystallization** temperature of the oil phase is in a range of from -20°C to 60°C, and an absolute value of a difference between a d-line refractive index of the aqueous phase and a d-line refractive index of the oil phase satisfies a relationship of $0.01 \leq$ |oil phase refractive index - aqueous phase refractive index| $\leq 0.115$.

That is, in the fat simulating composition according to the present disclosure, the melting point or the crystallization temperature of the oil phase, and the difference between the d-line refractive index of the aqueous phase and the d-line refractive index of the oil phase fall within the predetermined ranges described above, such that it is possible to exhibit a color change simulating a fat portion of livestock meat before and after heating and to exhibit a color simulating a fat portion of heated livestock meat after heating.

**In** the present disclosure, "the fat simulating composition exhibits a color change simulating a fat portion of livestock meat before and after heating" means that an observer can visually recognize that the color change of the fat simulating composition by heating is the same as the color change exhibited when the fat portion (that is, fat) of livestock meat is heated. Such a color change may be specifically a change from milky white to translucent. In the present disclosure "the fat simulating composition exhibits a color simulating a fat portion of heated livestock meat after heating" means that an observer can visually recognize that the color of the fat simulating composition exhibited after heating is the same as the color exhibited in the fat portion of the heating livestock meat.

The reason why the fat simulating composition according to the present disclosure exhibits the above effect is not clear, but is presumed as follows.

A fat portion contained in livestock meat is configured to contain a large number of fat cells containing an oil and/or fat therein. Therefore, the fat portion contained in the livestock meat is close to a state of containing a large amount of oil droplets. The fat simulating composition according to the present disclosure contains an aqueous phase and an oil phase dispersed in the aqueous phase (that is, in the form of an oil-in-water composition), and thus has a structure similar to the structure of the fat portion contained in the livestock meat.

In the fat simulating composition according to the present disclosure, the melting point or the crystallization temperature of the oil phase is within the range of from -20°C to 60°C, and the d-line refractive index of the aqueous phase and the d-line refractive index of the oil phase satisfies a relationship of $0.01 \leq |$oil phase refractive index - aqueous phase refractive index$| \leq 0.115$, such that light scattering due to the difference in refractive index between the aqueous phase and the oil phase becomes small to the extent that the fat simulating composition becomes translucent when heated.

Therefore, it is presumed that the fat simulating composition according to the present disclosure exhibits a color change simulating a fat portion of livestock meat before and after heating and exhibits a color simulating a fat portion of heated livestock meat after heating.

In JP-B No. 6446473 and WO No. 2013/190921, there is no attention on a color change before and after heating.

(Oil Phase and Aqueous Phase)

The fat simulating composition according to the present disclosure contains an aqueous phase and an oil phase dispersed in the aqueous phase.

In the fat simulating composition according to the present disclosure, the aqueous phase is a continuous phase in which the oil phase is dispersed.

In the present disclosure, the term "aqueous phase" is used as a term contrasting with "oil phase", and includes water and components other than water.

The water contained in the aqueous phase may be any water that can be used for food, and is not particularly limited.

Examples of the components other than water contained in the aqueous phase include a non-animal-derived edible resin, a protein, a carbohydrate, an edible additive having a solubility in water at 25°C of 1% by mass or more, and a surfactant. Details of the components other than water contained in the aqueous phase will be described below.

In the fat simulating composition according to the present disclosure, the oil phase is a phase dispersed in an aqueous phase (that is, a dispersed phase). The oil phase dispersed in the aqueous phase includes both an embodiment in which the entire oil phase is present in the aqueous phase and an embodiment in which a part of the oil phase is exposed from a surface of the aqueous phase.

In the present disclosure, the melting point or the crystallization temperature of the oil phase is within a range of from -20°C to 60°C.

The fact that the melting point or the crystallization temperature of the oil phase is within the range of from -20°C to 60°C contributes to the fact that the fat simulating composition exhibits a color change simulating a fat portion of livestock meat before and after heating.

The oil phase is not particularly limited as long as the melting point or the crystallization temperature is within the range of -20°C to 60°C. In order to set the melting point or the crystallization temperature of the oil phase within the above range, the oil phase may be formed using an oil and/or a fat having a melting point or a crystallization temperature within a range of -20°C to 60°C.

The oil phase contains an oil and/or fat.

In the fat simulating composition of the present disclosure, as the oil and/or fat, an oil and/or fat having a melting point or a crystallization temperature within a range of -20°C to 60°C is used. Details of the kind, preferred aspects, and the like of the oil and/or fat applied to the fat simulating composition of the present disclosure will be described below.

The oil phase may contain one kind of oil or fat, or may contain two or more kinds of oils and/or fats.

In the present disclosure, the melting point or the crystallization temperature of the oil phase means a melting point or the crystallization temperature of the oil and/or fat contained in the oil phase.

As for the melting point of the oil phase, a melting point of the oil and/or fat forming the oil phase is measured in accordance with "Standard Methods for the Analysis of Fats, Oils and Related Materials 2.2.4.2 (1996) published by Japan Oil Chemists' Society, 1996 edition".

As for the crystallization temperature of the oil phase, a crystallization temperature of the oil and/or fat forming the oil phase is measured by measuring a temperature showing an endothermic peak generated when the oil and/or fat is crystallized using a differential scanning calorimeter (DSC). As the differential scanning calorimeter, for example, "DSC3" manufactured by Mettler-Toledo International Inc. can be used.

The oil phase may be one kind of oil or fat, or may be a mixture of two or more kinds of oils and/or fats.

The oil phase may contain an oily component other than the oil and/or fat. Examples of the oily component other than oil and/or fat include an oily flavor and a solvent. In the present disclosure, the oily component is a component having a solubility in water at 25°C of less than % by mass (less than 0.1 g/L), and means a component that can be dissolved or dispersed in the oil and/or fat.

In the oil phase, oils and fats are contained as a main component of the oil phase. In the present disclosure, the main component of the oil phase means that a content of the main component with respect to all the components forming the oil phase is from 50% by mass to 100% by mass on a mass basis. It is preferable that all the components forming the oil phase (that is, 100% by mass) are oils and fats.

The oil phase can be a granular material. The oil phase is preferably a granular material having a volume average particle diameter of from 10 μm to 500 μm. The volume average particle diameter is more preferably from 30 μm to 400 μm, and still more preferably from 50 μm to 300 μm.

In a case in which the oil phase is a granular material having a volume average particle diameter of 10 μm or more, the oil phase easily leaks from the aqueous phase by pressurization, and a release amount of oily contents when the fat simulating composition is chewed is large, and it is easy to obtaining a juicy texture similar to that of fat of livestock meat.

In a case in which the oil phase is a granular material having a volume average particle diameter of 500 μm or less, when the fat simulating composition is visually observed, it is difficult to visually recognize that a large number of oil phases (oil droplets) are contained in the fat simulating composition. Therefore, an appearance of the fat simulating composition is closer to that of a fat portion contained in livestock meat.

In the present disclosure, the volume average particle diameter is measured by the following method. Hereinafter, a measurement procedure of the volume average particle diameter will be described.

The fat simulating composition is immersed in a 100 mM aqueous solution of sodium ethylenediamine-N,N,N',N'-tetraacetate (manufactured by FUJIFILM Wako Pure Chemical Corporation) for 1 hour. After 1 hour, the suspended granular materials are separated by specific gravity to collect the granular materials from the fat simulating composition, and the granular materials are placed on a polystyrene petri dish of 60 mmφ. At this time, the collected granular materials are prevented from overlapping in a depth direction of the petri dish. The granular materials collected in the petri dish are observed with a transmission optical microscope and imaged at an objective magnification of 5 times.

200 or more images of the granular materials contained in a screen obtained by imagining were selected, and an equivalent circle diameter of each granular material (a diameter of a perfect circle corresponding to an area of the image of the granular material) was calculated by image processing software (for example, ImageJ).

A method for calculating a volume average particle diameter Mv is as follows.

It is assumed that there are n1, n2, ····, and nk particles having particle diameters of d1, d2, ····, and dk, respectively, in the ascending order of particle diameter. The volume per particle is denoted by Vi. At this time, the volume average particle diameter Mv can be calculated by the following equation.

$$Mv = \sum_{i=1}^{k} \left( \frac{Vi \cdot di}{Vi} \right)$$

In a case in which the volume ratios of the aqueous phase and the oil phase are the same, an area of an interface between the aqueous phase and the oil phase decreases as the particle diameter of the dispersed phase increases, and light scattering due to a difference in refractive index between the aqueous phase and the oil phase decreases. Therefore, when the volume of the aqueous phase is the same as the volume of the oil phase, as the particle diameter of the oil phase increases, the fat simulating composition easily exhibits translucency when **heated** even in a case in which the difference in refractive index between the aqueous phase and the oil phase is large.

A ratio of the volume of the oil phase to a total volume of the fat simulating composition is preferably from 10% by volume to 70% by volume, more preferably from 15% by volume to 65% by volume, and still more preferably from 20% by volume to 60% by volume.

**In the** fat simulating composition according to the present disclosure, an absolute value of a difference between a d-line refractive index of the aqueous phase and a d-line refractive index of the oil phase (hereinafter, also referred to as "difference in refractive index") satisfies a relationship of 0.01 ≤ |oil phase refractive index - aqueous phase refractive index| ≤ 0.115.

**In the** present disclosure, the d-line refractive index is adopted as the "refractive index" from the viewpoint of corresponding to visibility with the naked eye.

The fact that the difference between the d-line refractive index of the aqueous phase and the d-line refractive index of the oil phase satisfies the relationship described above contributes to the fact that the fat simulating composition when heated exhibits a color change simulating a fat portion of livestock meat. Specifically, when the absolute value of the difference in refractive index between the aqueous phase and the oil phase is in the range of 0.01 ≤ |oil phase refractive index - aqueous phase refractive index| ≤ 0.115, the fat simulating composition can exhibit translucency that reminds of the form of a fat portion of heated livestock meat.

The difference in refractive index is preferably 0.096 ≤ |oil phase refractive index - aqueous phase refractive index| ≤ 0.106, and more preferably 0.0717 ≤ |oil phase refractive index - aqueous phase refractive index| ≤ 0.086, from the viewpoint of a color change simulating a fat portion of livestock meat before and after heating.

As for the d-line refractive indexes of the aqueous phase and the oil phase, it is preferable that the d-line refractive index of the aqueous phase is smaller than the d-line refractive index of the oil phase (that is, a relationship of the d-line refractive index of the aqueous phase < the d-line refractive index of the oil phase is satisfied) from the viewpoint of exhibiting a color change simulating a fat portion of livestock meat before and after heating and exhibiting transparency simulating a fat portion of heated livestock meat.

**In** the present disclosure, in a case in which the oil phase is formed of one kind of oil and/or fat, the d-line refractive index of the oil phase is a d-line refractive index exhibited by the oil and/or fat. In a case in which the oil phase is formed of a mixture of two or more kinds of oils and/or fats, the d-line refractive index of the oil phase is a d-line refractive index exhibited by the mixture of oils and/or fats. In a case in which the oil phase is formed of one kind or two kinds or more of oils and fats and a mixture of oily components other than the oil and/or fat, the d-line refractive index of the oil phase is a d-line refractive index exhibited by the oils and/or fats and the mixture of oily components other than the oil and/or fat.

In the present disclosure, the d-line refractive index of the oil phase is preferably from 1.35 to 1.55, more preferably from 1.37 to 1.53, and still more preferably from 1.4 to 1.5.

The d-line refractive index of the oil phase can be adjusted by the kind and content of the oil and/or fat contained in the oil phase.

In the present disclosure, the d-line refractive index of the aqueous phase is preferably from 1.33 to 1.55, more preferably from 1.35 to 1.53, and still more preferably from 1.37 to 1.5.

In the present disclosure, the d-line refractive indexes of the aqueous phase and the oil phase are measured by the following method.

~d-Line Refractive Index of Oil Phase~

A component that forms the oil phase (oily component to be optionally used other than oil and/or fat) is prepared as a sample.

The sample is prepared using the fat simulating composition by the following method.

The fat simulating composition is placed on a hot plate heated to 90°C, and heated to melt the oil and/or fat. By pressurizing the heated fat simulating composition using a pressurizing means (for example, pincers or the like), a liquid containing a water-soluble substance and an oil-soluble substance contained in the fat simulating composition is filtered out.

The filtrate is collected and heated at 60°C for 24 hours to separate the filtrate into an aqueous phase and an oil phase. The separated oil phase is collected and used as a sample for measurement.

In a case in which it is difficult to prepare a sample using the fat simulating composition by the method described above, the kind and content of the component forming the oil phase are analyzed, and a sample having the same component configuration as the analysis result can be prepared and used.

In a case in which the component of the oil phase is determined, a sample formed of the determined component of the oil phase may be used. As an example, in the case of an oil phase prepared in Examples described below, a d-line refractive index of the oil and/or fat used as the oil phase is measured.

The d-line refractive index is measured using an Abbe refractometer (digital Abbe refractometer DR-A1-Plus, manufactured by ATAGO CO., LTD.) after adjusting the temperature of the sample to 25°C and confirming that the sample becomes completely liquid.

In a case in which the sample does not completely become liquid at 25°C, a value calculated as described below is taken as a target d-line refractive index.

Using an Abbe refractometer NAR-2T (manufactured by ATAGO CO., LTD.) capable of adjusting the temperature, the d-line refractive index is measured at two temperatures in a temperature range of from a temperature at which the sample becomes completely liquid to 60°C. Using the obtained measured value, the refractive index at 25°C is extrapolated to obtain a calculated value.

~Measurement of d-Line Refractive Index of Aqueous Phase~

A sample having a composition of an aqueous phase is prepared.

In a case in which a sample is prepared using the fat simulating composition, the aqueous phase can be separated from the fat simulating composition and collected by the same method as in the measurement of the d-line refractive index of the oil phase described above to obtain a sample for measurement.

As an example, a sample can be prepared by the following procedure as long as the sample is an aqueous phase prepared in Examples described below.

An aqueous solution containing an edible ionically crosslinkable polymer (hereinafter, referred to as an aqueous solution A) and an aqueous solution containing a cation (hereinafter, referred to as an aqueous solution B) are prepared.

The aqueous solution A is poured into a plastic petri dish (AXEL petri dish, $\varphi$90 mm $\times$ 20 mm, manufactured by AS ONE Corporation) so as to have a thickness of 0.5 mm. Next, after spraying the aqueous solution B onto a surface of the aqueous solution A using a hand spray (DIA SPRAYER pistol sprayer for food, manufactured by FURUPLA CO., LTD.), the aqueous solution B is further poured to a thickness of 3 mm.

The plastic petri dish containing the aqueous solution A and the aqueous solution B is allowed to stand in a refrigerator having an internal temperature of 5°C for 2 hours to crosslink the edible ionically crosslinkable polymer, thereby obtaining a sample.

The d-line refractive index is measured by adjusting the temperature of the obtained sample to 25°C using an Abbe refractometer (digital Abbe refractometer DR-A1-Plus, manufactured by ATAGO CO., LTD.).

Examples of the means for obtaining a difference in refractive index satisfying the relationship of 0.01 $\leq$ |oil phase refractive index - aqueous phase refractive index| $\leq$ 0.115 include adjusting the d-line refractive index of the aqueous phase can be exemplified.

Examples of a means for adjusting the d-line refractive index of the aqueous phase include increasing a solid content concentration of the aqueous phase.

The solid content concentration of the aqueous phase is preferably 1% by volume or more, more preferably 5% by volume or more, and still more preferably 10% by volume or more, from the viewpoint of adjusting so as to satisfy the relationship of 0.01 $\leq$ |oil phase refractive index - aqueous phase refractive index| $\leq$ 0.115. An upper limit of the solid content concentration is not particularly limited, and can be, for example, 50% by volume.

In the present disclosure, the solid content concentration of the aqueous phase means a volume-based concentration of all components other than water among the components contained in the aqueous phase.

Examples of the means for increasing the solid content concentration of the aqueous phase include a) removing moisture by heating and b) adjusting a content of components other than water.

Examples of a) the removing of moisture by heating include a heat treatment of the prepared crude fat simulating composition.

Both the heat treatment and heat drying treatment may be performed, and it is preferable to perform both the heat treatment and the heat drying treatment.

For the details of the heat treatment and the heat drying treatment, the contents of the heating step described in detail in the description of the method of producing a fat simulating composition can be applied.

Examples of b) the adjusting of the content of the components other than water include adjusting a content of at least one selected from the group consisting of a non-animal-derived edible resin, a protein, a carbohydrate, and an edible additive having a solubility in water at 25°C of 1% by mass or more among the components other than water contained in the aqueous phase.

In a certain embodiment, it is preferable that the aqueous phase contains at least one selected from a non-animal-derived edible resin, a protein, or a carbohydrate, and it is preferable that a content of at least one selected from a non-animal-derived edible resin, a protein, or a carbohydrate is adjusted to increase the solid content concentration of the aqueous phase.

Examples of the non-animal-derived edible resin include a polysaccharide (for example, carrageenan, pectin, alginic acid or a salt thereof, or arabic gum) and a cellulose derivative (for example, hydroxypropyl methyl cellulose or methyl cellulose).

Examples of the protein include soybean protein, pea protein, broad bean protein, gluten.

Examples of the carbohydrate include a starch.

A content of the at least one selected from a non-animal-derived edible resin, a protein, or a carbohydrate in the aqueous phase can be set according to a function exhibited by these components.

Among them, as a preferred embodiment for increasing the solid content concentration of the aqueous phase, a transparent polysaccharide (for example, carrageenan, pectin, alginic acid or a salt thereof, or arabic gum) that can retain water and exhibits a gel state is more preferable, and pectin and alginic acid or a salt thereof are still more preferable from the viewpoint of heat resistance.

The non-animal-derived edible resin exemplified above may be an ionically crosslinkable polymer. The non-animal-derived edible resin may be a gel containing an ionically crosslinkable polymer and an edible ionically crosslinkable polymer crosslinked with a cation. The details of the ionically crosslinkable polymer and the edible ionically crosslinkable polymer crosslinked with a cation will be described hereinafter.

In a certain embodiment, it is preferable that the aqueous phase contains at least one selected from edible additives having a solubility in water at 25°C of 1% by mass or more (hereinafter, also referred to as "specific additive"), and it is preferable that a content of the at least one elected from specific additives is adjusted to increase the solid content concentration of the aqueous phase.

Examples of the specific additives include a seasoning (for example, Na glutamate or the like), a sweetener (for example, sucrose, reduced starch syrup, or the like), and a pH adjusting agent (for example, citric acid, Na lactate, or the like). Among them, reduced starch syrup is preferable as the specific additive. The reduced starch syrup is preferable because it has a low taste and has a small influence on the flavor of the fat simulating composition.

Examples of the specific additive include sodium chloride, a water-soluble vitamin (for example, vitamin B1, vitamin C, or the like), and a preservative (for example, potassium sorbate, calcium sorbate, or the like).

A salt containing a cation described below is included in an aspect of the specific additive.

It is preferable that the specific additive has a turbidity of 100 degrees or less using formazine as a standard material. It is advantageous that the turbidity of the specific additive is 100 degrees or less from the viewpoint that the fat simulating composition has an appearance simulating livestock meat.

In the present disclosure, the turbidity of the specific additive is measured by the method in accordance with "9-3 scattered light turbidity measurement method" in JIS K0101:1998 "Industrial water test method".

A content of the specific additive in the aqueous phase can be measured according to the function exhibited by the specific additive. In a case in which reduced starch syrup is used as the specific additive, a content of the reduced starch syrup is preferably 7.5% by mass or more, more preferably 10% by mass or more, and still more preferably 20% by mass or more, with respect to a total amount of the components contained in the aqueous phase, from the viewpoint of increasing the solid content concentration of the aqueous phase.

· Oil and/or Fat

Examples of the oil and/or fat include a vegetable oil and/or fat, an animal oil and/or fat, a fatty acid, a fatty acid glyceride, and a mixture thereof.

The fatty acid is a monovalent carboxylic acid of a long chain hydrocarbon and is represented by General Formula $C_nH_mCOOH$ (n and m each are an integer of 1 or more).

In the present disclosure, "oil and/or fat" means "edible oil and/or fat".

Examples of the vegetable oil and/or fat include camellia oil, rapeseed oil, soybean oil, palm oil, olive oil, coconut oil, rice oil, sesame oil, corn oil, grapeseed oil, canola oil, sunflower oil, and a mixture thereof.

Examples of the animal oil and/or fat include beef tallow, lard, whale oil, and fish oil.

Examples of the fatty acid include saturated fatty acids such as lauric acid, stearic acid, isostearic acid, palmitic acid, myristic acid, arachidic acid, and behenic acid; and unsaturated fatty acids such as oleic acid, linoleic acid, α-linolenic acid, eicosenoic acid, and erucic acid.

It is preferable that the oil and/or fat is an oil and/or a fat having an unsaturated bond in the molecular structure. From such a viewpoint, the oil phase is more preferably a vegetable oil and/or fat having a melting point of from -25°C to 25°C or an unsaturated fatty acid having a melting point of from -25°C to 25°C, and still more preferably a vegetable oil and/or fat having a melting point of from -25°C to 25°C.

The vegetable oil and/or fat having a melting point of from -25°C to 25°C is preferably at least one selected from coconut oil (melting point: from 20°C to 28°C), olive oil (melting point: from 0°C to 6°C), soybean oil (melting point: from -7°C to 8°C), canola oil (melting point: from 0°C to 12°C), sunflower oil (melting point: from -18°C to -16°C), sesame oil (melting point: from -3°C to -6°C), or grapeseed oil (melting point: from -24°C to -11°C), and coconut oil or olive oil is more preferable and coconut oil is particularly preferable from the viewpoint of bringing a color change closer to that of fat of livestock meat during heating.

The unsaturated fatty acid having a melting point of from -25°C to 25°C is preferably at least one selected from the group consisting of oleic acid (13.4°C), linoleic acid (-5°C), and α-linolenic acid (-11°C), and oleic acid is more preferable from the viewpoint of bringing a color change closer to that of fat of livestock meat during heating.

· Ionically Crosslinkable Polymer

The non-animal-derived aqueous resin contained in the aqueous phase may be an edible ionically crosslinkable polymer crosslinked with a cation.

The term "ionically crosslinkable polymer" means a polymer that is crosslinked by a reaction with an ion.

The term "edible" means a property that does not adversely affect a health condition when orally ingested by a human.

Examples of the edible ionically crosslinkable polymer include a polysaccharide having at least one selected from the group consisting of a carboxy group, a carboxylic acid anion group ($-COO^-$), a sulfo group, and a sulfonic acid anion group ($-SO_3^-$).

Examples of the edible ionically crosslinkable polymer include alginic acid or a salt thereof, carrageenan, pectin (for example, low methoxyl (LM) pectin or high methoxyl (HM) pectin), and deacylated (LA) gellan gum.

From the viewpoint of improving the heat resistance of the fat simulating composition, the edible ionically crosslinkable polymer is preferably at least one selected from the group consisting of alginic acid or a salt thereof, LM pectin, and LA gellan gum.

A viscosity of an aqueous solution containing 1% by mass of the edible ionically crosslinkable polymer (an aqueous solution containing 1% by mass of the ionically crosslinkable polymer with respect to the entire aqueous solution) is preferably from 10 mPa· s to 3,000 mPa·s, and more preferably from 20 mPas to 1,000 mPas.

The viscosity of the aqueous solution containing 1% by mass of the edible ionically crosslinkable polymer is a value measured by a tuning fork vibration type viscometer under a temperature condition of 20°C.

As the tuning fork vibration type viscometer, for example, SV-10 manufactured by A&D Company, Limited can be used.

The cation is preferably a metal ion having an ionic valence of 2 or higher.

Examples of the metal ion include divalent metal ions such as a calcium ion, a magnesium ion, an iron(II) ion, a copper(II) ion, a zinc ion, and a manganese ion, and trivalent metal ions such as an aluminum ion and an iron(III) ion.

From the viewpoint of obtaining a stable crosslinked structure, the metal ion is preferably at least one selected from a calcium ion, a magnesium ion, or a zinc ion, and more preferably a calcium ion.

A content of the edible ionically crosslinkable polymer crosslinked with a cation is preferably from 0.01% by mass to 20% by mass, more preferably from 0.1% by mass to 10% by mass, and still more preferably from 0.5% by mass to 5% by mass, with respect to the entire fat simulating composition.

· Surfactant

It is preferable that the fat simulating composition contains a surfactant.

The surfactant can be used as a component contained in the aqueous phase.

In a case in which a surfactant is contained, the release amount of the oil and/or fat is further increased when the fat simulating composition after heat cooking is chewed. The reason is presumed as follows.

In a case in which the oil phases (that is, droplets containing oil and/or fat) in the fat simulating composition are in contact with each other, the oil and/or fat easily leaks during heat cooking. In this case, when the fat simulating composition after heat cooking is chewed, the release amount of the oil and/or fat is easily reduced.

In the case in which a surfactant is contained, the oil phases are likely to have an appropriate distance, and the leakage of the oil and/or fat can be suppressed during heat cooking. As a result, when the fat simulating composition after heat cooking is chewed, the release amount of the oil and/or fat increases.

Examples of the surfactant include an edible surfactant.

Examples of the edible surfactant include glycerin fatty acid ester, polyglycerin fatty acid ester, organic acid monoglyceride, sorbitan fatty acid ester, propylene glycol fatty acid ester, sucrose fatty acid ester, polyglycerin condensed ricinoleic acid ester, and lecithin.

It is preferable that the glycerin fatty acid ester contains a monoglyceride as a main component.

The main component means that a content of the monoglyceride is 90% by mass or more with respect to the entire glycerin fatty acid ester.

The monoglyceride is preferably a monoesterified product of a saturated or unsaturated fatty acid having from 2 to 24 carbon atoms and glycerin.

Examples of the fatty acid include behenic acid, stearic acid, and palmitic acid.

The glycerin fatty acid ester may contain a diglyceride.

The diglyceride is preferably a diesterified product of a saturated or unsaturated fatty acid having from 2 to 24 carbon atoms and glycerin.

The polyglycerin fatty acid ester is preferably an esterified product of a saturated or unsaturated fatty acid having from 2 to 24 carbon atoms and polyglycerin.

Specific examples of the polyglycerin fatty acid ester include polyglyceryl monomyristate, polyglyceryl dimyristate, polyglyceryl trimyristate, polyglyceryl monopalmitate, polyglyceryl dipalmitate, polyglyceryl tripalmitate, polyglyceryl monostearate, polyglyceryl distearate, polyglyceryl tristearate, polyglyceryl monoisostearate, polyglyceryl diisostearate, polyglyceryl triisostearate, polyglyceryl monooleate, polyglyceryl dimonooleate, and polyglyceryl trimonooleate.

The organic acid monoglyceride is obtained by esterifying a hydroxyl group derived from glycerin of a monoglyceride using an organic acid.

Examples of the organic acid include citric acid, succinic acid, acetic acid, and lactic acid, citric acid and succinic acid are preferable, and citric acid is more preferable.

The sorbitan fatty acid ester refers to an esterified product of sorbitan and a fatty acid.

The sorbitan fatty acid ester is preferably an esterified product of sorbitan and a saturated or unsaturated fatty acid having from 2 to 18 carbon atoms.

Specific examples of the sorbitan fatty acid ester include sorbitan monocaprate, sorbitan monolaurate, sorbitan monopalmitate, sorbitan monostearate, sorbitan distearate, sorbitan sesquistearate, sorbitan tristearate, sorbitan trioleate, sorbitan monoisostearate, sorbitan sesquiisostearate, sorbitan monooleate, sorbitan sesquioleate, and sorbitan coconut oil fatty acid.

The propylene glycol fatty acid ester is an esterified product of a fatty acid and propylene glycol.

As the fatty acid used for the synthesis of the propylene glycol fatty acid ester, a saturated or unsaturated fatty acid having from 2 to 24 carbon atoms is preferable.

Specific examples of the propylene glycol fatty acid ester include propylene glycol palmitate, propylene glycol stearate, and propylene glycol behenate.

The sucrose fatty acid ester is an esterified product of sucrose and a fatty acid.

As the fatty acid used for the synthesis of the sucrose fatty acid ester, a saturated or unsaturated fatty acid having from 2 to 24 carbon atoms is preferable.

The sucrose fatty acid ester is preferably an esterified product of sucrose and one or two or more fatty acids selected from the group consisting of caprylic acid, capric acid, lauric acid, myristic acid, palmitic acid, palmitoleic acid, stearic acid, oleic acid, arachidic acid, and behenic acid.

The polyglycerin condensed ricinoleic acid ester is an esterified product of polyglycerin fatty acid ester and a ricinoleic acid condensate.

Specific examples of the polyglycerin condensed ricinoleic acid ester include an esterified product of the compound described as a specific example of the polyglycerin fatty acid ester described above, and a ricinoleic acid condensate.

Lecithin refers to phosphatidylcholine itself or a mixture containing at least phosphatidylcholine.

The mixture containing at least phosphatidylcholine is generally a mixture that can contain, in addition to phosphatidylcholine, phosphatidylserine, phosphatidylethanolamine, phosphatidylinositol, N-acylphosphatidylethanolamine, phosphatidylglycerol, phosphatidic acid, lysophosphatidylcholine, lysophosphatidic acid, sphingomyelin, sphingoethanolamine, and the like.

As the lecithin, enzymatically decomposed lecithin (so-called lysolecithin) can be used.

The enzymatically decomposed lecithin is a composition containing lysophosphatidylcholine in which one fatty acid of a phosphatidylcholine molecule is lost by an enzyme such as phospholipase. Note that, in the fat simulating composition of the present disclosure, the enzymatically decomposed lecithin includes hydrogenated enzymatically decomposed lecithin in which oxidation stability is improved by performing hydrogenation to convert a conjugated fatty acid into a saturated fatty acid.

The surfactants may be used singly, or in combination of two or more kinds thereof.

A hydrophilic-hydrophobic balance (HLB) value of the surfactant is, for example, preferably 8 or more, more preferably 10 or more, and still more preferably 12 or more, from the viewpoint of emulsion dispersibility.

An upper limit of the HLB value of the emulsifier is not particularly limited, and is generally 20 or less, and preferably 18 or less.

HLB usually means a hydrophilic-hydrophobic balance used in the field of surfactants. The HLB value is calculated using the following Kawakami equation. Note that in a case in which a commercially available product is used as the surfactant, commercially available catalog data is preferentially adopted.

$$\text{HLB} = 7 + 11.7\log(\text{Mw}/\text{Mo})$$

Mw represents a molecular weight of a hydrophilic group of the surfactant, and Mo represents a molecular weight of a hydrophobic group of the surfactant.

The hydrophobic group of the surfactant is an atomic group having low affinity with water. Examples of the hydrophobic group include an alkyl group, an alkenyl group, an alkylsilyl group, and a perfluoroalkyl group. Specifically, in a case in which the surfactant is the "glycerin fatty acid ester, polyglycerin fatty acid ester, organic acid monoglyceride, sorbitan fatty acid ester, propylene glycol fatty acid ester, sucrose fatty acid ester, polyglycerin condensed ricinoleic acid ester, or lecithin" described above, the hydrophobic group refers to an alkyl group or alkenyl group derived from a fatty acid.

The hydrophilic group of the surfactant is an atomic group having high affinity with water. Specifically, the hydrophilic group of the surfactant refers to an atomic group other than a hydrophobic group in the structure of the surfactant.

A Hansen solubility parameter (HSP) distance between the ionically crosslinkable polymer and the hydrophilic part of the surfactant is preferably 10 or less, more preferably 9 or less, and still more preferably 8 or less.

When the granular materials in the fat simulating composition are in contact with each other, the oil and/or fat easily leaks from the granular material during heat cooking. In this case, when the fat simulating composition after heat cooking is chewed, the release amount of the oil and/or fat is easily reduced.

In a case in which the HSP distance between the ionically crosslinkable polymer and the hydrophilic part of the surfactant is within the above numerical range, the ionically crosslinkable polymer is likely to be present in the gaps between the granular materials. In this case, the granular materials are likely to have an appropriate distance from each other, and the oil and/or fat is less likely to leak from the granular material during heat cooking. Accordingly, when the fat simulating composition after heat cooking is chewed, the release amount of the oil and/or fat increases.

The HSP distance can be adjusted by changing the structure of the ionically crosslinkable polymer and the hydrophilic part of the surfactant.

The HSP distance is a combination of three kinds of cohesive energy density values ($\delta$D: dispersion term, $\delta$P: dispersion electrode, and $\delta$H: hydrogen bond term), and each unit is $[J/cm^3]^{1/2}$.

The HSP distance is calculated as follows.

The HSP distance can be obtained as a registered value or an estimated value in HSPiP 4th Edition version 4.0.04, which is commercially available software.

This software can be obtained from a site http://hansen-solubility.com/index.html or the like. In order to obtain the HSP on the basis of such software, it is possible to obtain HSP on the basis of the document (for example, C. M. Hansen solubility parameteres: a user7S handbook 2nd edition, CEC press, 2007, ISBN-10: 0849372488) by Hansen et al.

A content of the surfactant is preferably from 0.05% by mass to 2% by mass, and more preferably from 0.10% by mass to 1% by mass, with respect to the entire fat simulating composition.

A content of the surfactant in the aqueous phase is preferably from 0.1% by mass to 4% by mass, and more preferably from 0.1% by mass to 2% by mass, with respect to the entire aqueous phase.

(Gel Containing Edible Ionically Crosslinkable Polymer Crosslinked With Cation)

It is preferable that the fat simulating composition contains a gel containing an edible ionically crosslinkable polymer crosslinked with a cation. The gel may be an aqueous phase in the fat simulating composition.

The gel refers to a gel that contains at least water and an edible ionically crosslinkable polymer crosslinked with a cation and exhibits a behavior as an elastic solid.

In a case in which the fat simulating composition contains a gel, it becomes easier to maintain a state in which the oil phases have an appropriate distance from each other. Therefore, the oil and/or fat is less likely to leak during heat cooking. Accordingly, when the fat simulating composition after heat cooking is chewed, the release amount of the oil and/or fat tends to increase.

It is preferable that the gel contains at least an edible ionically crosslinkable polymer that is crosslinked with a cation and water, and contains an edible ionically crosslinkable polymer that is crosslinked with a cation and other additives other than water, as necessary.

As the edible ionically crosslinkable polymer crosslinked with a cation contained in the gel, the edible ionically crosslinkable polymer crosslinked with a cation described above is applied.

The water contained in the gel may be any water that can be used for food, and is not particularly limited.

Examples of the other additives contained in the gel include a seasoning, an acidulant, a bittering agent, a spice, a sweetener, an antioxidant, a colorant, a color coupler, a flavor, a stabilizer, and a preservative. These additives may be the "specific additives" described above.

A content of the edible ionically crosslinkable polymer crosslinked with a cation in the gel is preferably from 0.1% by mass to 10% by mass, more preferably from 0.2% by mass to 5% by mass, and still more preferably from 0.5% by mass to 3% by mass, with respect to the entire gel.

A content of the other additives in the gel is preferably from 0% by mass to 20% by mass with respect to the entire gel.

A volume of the gel to a volume of the oil phase is preferably from 10% to 300%, more preferably from 30% to 200%, and still more preferably from 50% to 150%.

The volume of the gel to the volume of the oil phase is measured as follows.

First, the volume of the fat simulating composition is measured using a laser volumetric meter. As the laser volumetric meter, for example, VL-300 manufactured by KEYENCE CORPORATION can be used.

Thereafter, the granular materials are collected from the fat simulating composition by the procedure described in the measurement procedure of the average particle diameter of the oil phases, and the collected granular materials are allowed to stand under a condition of 50°C for 1 hour to integrate the granular materials, and then a volume thereof is measured by a volumetric meter. As the volumetric meter, for example, a measuring cylinder can be used.

The volume of the gel to the volume of the oil phase is determined by the following equation.

Equation: Volume of gel to volume of oil phase = [(Volume ($m^3$) of fat simulating composition - Volume ($m^3$) of oil phase/Volume ($m^3$) of fat simulating composition] $\times$ 100

(Shape of Fat simulating composition)

The shape of the fat simulating composition is not particularly limited, and may be amorphous or a fat simulating structure having a certain shape. From the viewpoint of application to a form imitating livestock meat such as a meat alternative, the fat simulating composition preferably is a fat simulating structure.

From the viewpoint of increasing the release amount of oily contents when the fat simulating structure is chewed, it is preferable that the fat simulating structure is sheet-like and has a thickness of 0.5 mm or more.

The "sheet-like" means a shape having a small thickness with respect to vertical and horizontal lengths.

According to the method of use, the thickness of the sheet-like fat simulating structure is preferably 1 mm or more from the viewpoint of increasing the release amount of oil when the fat simulating structure is chewed.

The thickness of the sheet-like fat simulating structure is more preferably 50 mm or less, still more preferably 10 mm or less, and still more preferably 5 mm or less, from the viewpoint of easily simulating fat of livestock meat and easily producing the fat simulating structure.

The thickness of the sheet-like fat simulating structure is measured by a non-contact type thickness meter.

As the thickness meter, for example, TAP-2H-50XY (product name) manufactured by COMS Co., Ltd. can be used.

(Method of Preparing Fat simulating composition)

A method of producing a fat simulating composition is not particularly limited, and a fat simulating composition is more preferably produced by a production method described in detail below.

An embodiment of the method of producing a fat simulating composition preferably includes:

a step (1) of forming droplets containing an oil and/or fat in an aqueous solution (droplet forming step);

a step (2) of solidifying the oil and/or fat in the aqueous solution to obtain particles containing solidified the oil and/or fat (oil and/or fat solidifying step);

a step (3) of adding an aqueous solution containing an edible ionically crosslinkable polymer and an aqueous solution containing a cation to the particles and crosslinking the edible ionically crosslinkable polymer to obtain a crude fat simulating composition (crosslinking step); and

a step (4) of heating the crude fat simulating composition to obtain a fat simulating composition (heating step).

The "droplets containing an oil and/or fat" in the step (1) and the "particles containing the solidified oil and/or fat" in the step (2) correspond to the "oil phase" in the present disclosure. The crosslinked edible ionically crosslinkable polymer forms a part of the "aqueous phase" in the present disclosure.

(1) Droplet Forming Step

Examples of a method of forming droplets containing an oil and/or fat in an aqueous solution include a method of dispersing an oil and/or fat in an aqueous solution.

As a method of dispersing an oil and/or fat in an aqueous solution, a method of emulsifying an aqueous solution and an oil and/or fat with an emulsifier is preferable.

Note that an oil and/or fat having a melting point of 0.1°C or higher is applied as the oil and/or fat.

Examples of the emulsifier include a rotary stirrer equipped with a propeller type, anchor type, paddle type, or turbine type stirring blade, a static type mixing machine such as a static mixer, a rotor and stator type emulsifier such as a homogenizer or CLEARMIX, a mill-type emulsifier with a grinding function, a high-pressure emulsifier such as a Manton-Gaulin type pressure emulsifier, a high-pressure nozzle emulsifier that generates cavitation under high pressure, a high-pressure collision type emulsifier that applies a shear force by colliding liquids under high pressure such as a microfluidizer, an ultrasonic emulsifier that generates cavitation using ultrasonic waves, and a membrane emulsifier that performs uniform emulsification through pores.

It is preferable to use a membrane emulsifier as the emulsifier from the viewpoint of improving the uniformity of the particle diameter of the droplets containing an oil and/or fat.

In a case in which emulsification is performed using a membrane emulsifier, the emulsification method may be either a direct membrane emulsification method or a permeate membrane emulsification method, and the direct membrane emulsification method is preferable.

As the porous membrane included in the membrane emulsifier, for example, a Shirasu Porous Glass (SPG) membrane is suitable. The SPG membrane can be purchased from SPG Technology Co., Ltd., for example.

As an emulsification method using a membrane emulsifier, for example, a method of dispersing an oil and/or fat in an aqueous solution containing water and a surfactant through a porous membrane is preferable.

A mass ratio of the aqueous solution used for emulsification to the oil and/or fat (mass of aqueous solution/mass of the oil and/or fat) is preferably from 1/1 to 10/1.

(2) Oil and/or fat Solidifying Step

Examples of the methods of solidifying the oil and/or fat in the droplets to obtain particles containing the solidified oil and/or fat include a method of curing the oil and/or fat using an oil curing agent, a method of cooling the droplets containing the oil and/or fat, and the like. From the viewpoint of obtaining a fat simulating composition that releases a large amount of oily contents during chewing, a method of cooling the oil and/or fat containing droplets is preferable.

Examples of the method of cooling the droplets containing the oil and/or fat include a method in which an aqueous solution containing droplets containing the oil and/or fat is cooled using a refrigerator or the like. The droplets containing the oil and/or fat are obtained by a step (1) of forming droplets containing oil and/or fat in an aqueous solution.

A cooling temperature is preferably higher than 0°C and equal to or lower than a melting point of the oil and/or fat.

A cooling time is not particularly limited, and the cooling is preferably performed until the oil and/or fat contained in the droplets is solidified.

After cooling, the solidified particles containing the oil and/or fat may be gathered in a supernatant of the solution, and in this case, it is preferable to recover the supernatant containing the particles. Then, it is preferable to perform the following crosslinking step using the recovered supernatant containing the particles.

Examples of a method of recovering the supernatant containing the particles include a method in which an aqueous solution other than the supernatant containing the particles is discharged using a separatory funnel.

A content of the oil and/or fat in the aqueous solution containing the particles obtained by the oil and/or fat solidifying step is preferably from 40% by mass to 90% by mass with respect to the entire solution.

(3) Crosslinking Step

The crosslinking step is a step of adding an aqueous solution containing an edible ionically crosslinkable polymer and an aqueous solution containing a cation to the particles (that is, the oil phase) obtained by the oil and/or fat solidifying step and crosslinking the edible ionically crosslinkable polymer to obtain a crude fat simulating composition.

Specific examples of the crosslinking step include a method in which an aqueous solution containing an edible ionically crosslinkable polymer is added to an aqueous solution containing the particles obtained by the oil and/or fat solidifying step, the mixture is stirred, and then crosslinking the edible ionically crosslinkable polymer by adding an aqueous solution containing a cation.

A content of the edible ionically crosslinkable polymer in the aqueous solution containing an edible ionically crosslinkable polymer is preferably from 0.5% by mass to 5% by mass with respect to the entire aqueous solution.

An addition amount of the aqueous solution containing an edible ionically crosslinkable polymer is preferably from 50% by mass to 200% by mass with respect to the mass of the aqueous solution containing the particles obtained by the oil and/or fat solidifying step.

Examples of the aqueous solution containing a cation include an aqueous solution that dissolves a salt containing a cation.

A content of the salt in the aqueous solution that dissolves a salt containing a cation is preferably from 0.5% by mass to 5% by mass with respect to the entire aqueous solution.

An addition amount of the aqueous solution containing a cation is preferably from 50% by mass to 200% by mass with respect to the addition amount of the aqueous solution containing an edible ionically crosslinkable polymer.

(4) Heating Step

The heating step is a step of performing a heat treatment on the crude fat simulating composition to obtain a fat simulating composition (heating step). By performing the heating step, moisture is removed from the crude fat simulating composition, and the solid content concentration of the aqueous phase of the fat simulating composition can be increased.

Examples of a heating means used in the heat treatment include heating in boiling water, hot air heating, near infrared heater heating, and microwave heating.

A heating temperature can be, for example, from 60°C to 120°C.

A heating time may be appropriately set according to the heating means used in the heat treatment. The heating time can be, for example, from 1 minute to 24 hours.

In the heating step, it is also possible to further perform another heat drying treatment after performing the heat treatment.

Examples of a heat drying means used in the heat drying treatment include heating in boiling water, hot air heating, near infrared heater heating, and microwave heating.

A heating temperature can be, for example, from 60°C to 120°C.

A heating time may be appropriately set according to the heating means used in the heat treatment. The heating time can be, for example, from 1 minute to 24 hours.

<Meat alternative>

It is preferable that a meat alternative contains a lean-like portion containing a protein and a fat simulating composition which is a fat simulating structure.

As the fat simulating composition, the fat simulating composition described above is applied.

(Lean-Like Portion)

The lean-like portion refers to a portion corresponding to a portion that looks lean in a raw meat-like meat alternative.

It is preferable that the lean-like portion contains a protein, and contains an oil and/or fat, a binder, and other additives, as necessary.

-Protein-

The lean-like portion contains a protein.

The protein preferably contains at least one of a vegetable protein or an animal protein, and more preferably contains a vegetable protein.

The vegetable protein is a protein collected from a plant.

The vegetable protein is not particularly limited as long as the vegetable protein is a protein collected from a plant. Examples of the origin of the vegetable protein include cereals such as wheat, barley, oats, rice, and corn; beans such as soybean, pea, red bean, chickpea, lentil, broad bean, mung bean, and lupin bean; seeds such as almond, peanut, cashew nut, pistachio, hazelnut, macadamia nut, linseed, sesame, rapeseed, cottonseed, safflower, and sunflower; potatoes such as potato, sweet potato, yam, artichoke, and cassava; vegetables such as asparagus, artichoke, cauliflower, broccoli, and green soybean; fruits such as banana, jack fruit, kiwi fruit, coconut, avocado, and olive; mushrooms such as mushroom, Eryngii mushroom, shiitake mushroom, shimeji mushroom, and maitake mushroom; and algae such as chlorella, spirulina, euglena, laver, kelp, seaweed, agar, hijiki, and mozuku. Among them, the origin of the vegetable protein is preferably at least one selected from the group consisting of wheat, soybean, pea, and rice, and is more preferably at least one selected from the group consisting of soybean and wheat, from the viewpoint of obtaining a meat alternative having an appearance and texture similar to those of mass meat.

The vegetable protein may contain one kind of plant-derived protein, or may contain two or more kinds of plant-derived proteins.

The animal protein is a protein collected from an animal.

The animal protein is not particularly limited as long as the animal protein is a protein collected from an animal. Examples of the animal protein include collagen, gelatin, keratin, fibroin, sericin, casein, conchiolin, elastin, protamine, egg yolk protein, and egg white protein.

The animal protein may contain one kind of animal protein, or may contain two or more kinds of animal proteins.

From the viewpoint of obtaining a meat alternative having a texture closer to that of livestock meat, it is preferable that the protein has a muscle-like texture.

The muscle-like texture refers to a texture that has a structure similar to that of a bundle of fibers and can be split into a fibrous shape in a certain direction.

Lean of livestock meat is derived from muscle. The muscle is composed of a bundle of muscle fibers. Therefore, the lean of the livestock meat has a structure like a bundle of fibers. Since the lean-like portion of the meat alternative according to the present embodiment has a muscle-like texture, it is possible to create a texture brought about by the presence of muscle fibers felt when eating livestock meat.

Examples of a method of imparting a muscle-like texture to a protein include a method of extruding a protein (water and the like may be added together with the protein, if necessary) by an extruder.

In the case in which the protein is extruded, the protein has a structure similar to that of a bundle of fibers along an extrusion direction of the extruder, and has a texture that can be split into a fibrous shape in the extrusion direction of the extruder.

A content of the protein is preferably from 50% by mass to 100% by mass, more preferably from 60% by mass to 95% by mass, and still more preferably from 70% by mass to 90% by mass, with respect to a total mass of the lean-like part.

It is preferable that the meat alternative according to an embodiment of the present disclosure contains a fiber bundle-shaped textured protein.

The fiber bundle-shaped textured protein is a protein having a certain fiber bundle-shaped texture.

The fiber bundle shape refers to a structure similar to a bundle of fibers extending one direction.

The fiber bundle-shaped textured protein is preferably a fiber bundle-shaped textured protein having a muscle-like texture from the viewpoint of the shape and texture.

The muscle-like texture refers to a texture that has a structure similar to that of a bundle of fibers and can be split in one direction.

Among them, the muscle-like texture is preferably a texture that has a structure similar to a bundle of fibers and can be split into fibers in one direction.

Lean of livestock meat is derived from muscle. The muscle is composed of a bundle of muscle fibers. Therefore, the lean of the livestock meat has a structure like a bundle of fibers. In a case in which the fiber bundle-shaped textured protein having a muscle-like texture is applied to the meat alternative according to an embodiment of the present disclosure, it is possible to obtain a meat alternative having a texture closer to that of livestock meat.

The fiber bundle-shaped textured protein is preferably composed of a vegetable protein.

The vegetable protein has the same meaning as described above, and also has the same preferred aspect described above.

The vegetable protein may contain one kind of plant-derived protein, or may contain two or more kinds of plant-derived proteins.

Examples of the fiber bundle-shaped textured protein having a muscle-like texture include a spongy fiber bundle-shaped textured protein and a fibrous fiber bundle-shaped textured protein.

The spongy refers to an isotropic porous structure in appearance.

The fibrous refers to an anisotropic fiber structure in appearance.

The isotropic porous structure refers to a structure in which a pore shape on a cut surface obtained by cutting at an arbitrary position is substantially elliptical and is approximately the same regardless of a direction.

An anisotropic fiber structure refers to a structure in which a cut surface obtained by cutting at an arbitrary position is fibrous. The fiber bundle-shaped textured protein preferably has a hole shape, and the hole shape has a structure different from a substantially elliptical shape or a substantially fibrous shape depending on the cutting direction.

Examples of a method of observing the cut surface include a method of cutting a section and observing the section with a microscope and a method of observing the section with X-ray computed tomography (CT).

It is preferable that the meat alternative according to an embodiment of the present disclosure contains a fiber bundle-shaped textured protein in which a fiber axis direction of the fiber bundle-shaped textured protein is oriented in one direction in an adjacent region.

The fiber axis direction of the fiber bundle-shaped textured protein means an orientation of a longitudinal direction of fibers forming the muscle-like texture.

The case in which the fiber axis direction of the fiber bundle-shaped textured protein is oriented in one direction in the adjacent region includes a case in which the fiber axis directions of some fiber bundle-shaped textured proteins are different in the adjacent region, but the fiber axis direction of the fiber bundle-shaped textured protein may be oriented in a constant direction as a whole, or may be oriented in one direction in the adjacent region while having a fluctuation as a whole.

The spongy textured protein having an isotropic porous structure is also formed into a fiber bundle-shaped textured protein by a method of loosening a protein into a fiber shape or a method of cutting a protein into a fiber shape.

From the viewpoint of the appearance or the texture, the fiber bundle-shaped textured protein contained in the meat alternative is more preferably a fibrous fiber bundle-shaped textured protein.

A content of the fiber bundle-shaped textured protein is preferably from 5% by mass to 95% by mass, more preferably from 7% by mass to 90% by mass, and still more preferably from 10% by mass to 85% by mass, with respect to a total mass of the meat alternative.

-Oil and/or fat-

The lean-like portion may contain an oil and/or fat.

Examples of the oil and/or fat include a vegetable oil and/or fat and an animal oil and or fat.

Examples of the vegetable oil and/or fat include the same ones as those described in the description of the fat simulating composition.

Examples of the animal oil and/or fat include beef tallow, lard, whale oil, and fish oil.

-Binder-

It is preferable that the lean-like portion contains a binder, as necessary.

In a case in which the lean-like portion contains a binder, the lean-like portion easily maintains one integrated shape.

The binder is not particularly limited as long as the binder is edible and can maintain the shape of the lean-like part.

Examples of the binder include a protein, a thickening polysaccharide, and a starch.

The protein used as the binder may be the same as or different from the protein contained in the lean-like part.

Examples of the protein used as the binder include a vegetable protein, an animal protein, and an enzyme.

Examples of the vegetable protein used as the binder include proteins derived from wheat, soybean, and rice.

Examples of the animal protein used as the binder include a milk protein and egg white.

Examples of the enzyme include transglutaminase.

Examples of the thickening polysaccharide include carrageenan, xanthan gum, pectin, locust bean gum, curdlan, guar gum, tragacanth gum, arabic gum, gellan gum, tamarind seed gum, cassia gum, tara gum, alginic acid or a salt thereof, agar, glucomannan, soybean polysaccharide, gelatin, pullulan, psyllium, chitosan, methyl cellulose, hydroxypropyl methyl cellulose, hydroxyethyl cellulose, carboxymethyl cellulose, and dextrin.

Examples of the starch include wheat starch, cassava starch, rice starch, glutinous rice starch, corn starch, waxy corn starch, sago starch, potato starch, arrowroot starch, lotus root starch, green bean starch, sweet potato starch, waxy potato starch, waxy cassava starch, and waxy wheat starch.

It is preferable that the binder contains a polysaccharide including a thermally irreversible gel-forming polysaccharide and a thermally reversible gel-forming polysaccharide, and a gelation retardant.

-Thermally Irreversible Gel-Forming Polysaccharide-

A thermally irreversible gel is a gel that maintains a shape thereof even when heated once a general gel (in this paragraph, the term "gel" refers to a gel that contains at least water and a thermally irreversible gel-forming polysaccharide and exhibits a behavior as an elastic solid) is formed.

The thermally irreversible gel-forming polysaccharide is a polysaccharide that forms a thermally irreversible gel.

As the thermally irreversible gel-forming polysaccharide, a polysaccharide that is crosslinked by a reaction with a cation is preferable from the viewpoint of solubility before gelation.

The cation as a gelling agent is preferably a metal ion having an ionic valence of 2 or higher.

Examples of the metal ion include divalent metal ions such as a calcium ion, a magnesium ion, an iron(II) ion, a copper(II) ion, a zinc ion, and a manganese ion, and trivalent metal ions such as an aluminum ion and an iron(III) ion.

From the viewpoint of obtaining a stable crosslinked structure, the metal ion is preferably at least one selected from a calcium ion, a magnesium ion, or a zinc ion, and more preferably a calcium ion.

Examples of the thermally irreversible gel-forming polysaccharide include a polysaccharide having at least one selected from the group consisting of a carboxy group, a carboxylic acid anion group ($-COO^-$), a sulfo group, and a sulfonic acid anion group ($-SO_3^-$).

Examples of the thermally irreversible gel-forming polysaccharide include alginic acid or a salt thereof, LM pectin, and LA gellan gum.

From the viewpoint of improving moldability and heat resistance of a gel, the thermally irreversible gel-forming polysaccharide is preferably at least one selected from the group consisting of alginic acid or a salt thereof and pectin.

A viscosity of an aqueous solution containing 1% by mass of the thermally irreversible gel-forming polysaccharide (an aqueous solution containing 1% by mass of the thermally irreversible gel-forming polysaccharide with respect to the entire aqueous solution) is preferably from 10 mPa·s to 3,000 mPa·s, and more preferably from 20 mPas to 1,000 mPas.

The viscosity of the aqueous solution containing 1% by mass of the thermally irreversible gel-forming polysaccharide is a value measured by a tuning fork vibration type viscometer under a temperature condition of 20°C.

As the tuning fork vibration type viscometer, for example, SV-10 (manufactured by A&D Company, Limited) can be used.

A content of the thermally irreversible gel-forming polysaccharide is preferably from 10% by mass to 90% by mass, more preferably from 20% by mass to 80% by mass, and still more preferably from 30% by mass to 70% by mass, with respect to a total mass of the binder.

-Thermally Reversible Gel-Forming Polysaccharide-

A thermally reversible gel is a gel that maintains a state thereof (in this paragraph, the term "gel" refers to a gel that contains at least water and a thermally reversible gel-forming polysaccharide and exhibits a behavior as an elastic solid) at room temperature (25°C) and is melted and liquefied (solated) when heat is applied.

The thermally reversible gel-forming polysaccharide is a polysaccharide that forms a thermally reversible gel.

Examples of the thermally reversible gel-forming polysaccharide include agar, carrageenan, furcellan, native gellan gum, locust bean gum, xanthan gum, guar gum, psyllium seed gum, glucomannan, tara gum, and tamarind seed gum.

The thermally reversible gel-forming polysaccharide is preferably carrageenan from the viewpoint of maintaining the shape of the meat alternative after heat cooking and the texture.

A content of the thermally reversible gel-forming polysaccharide is preferably from 10% by mass to 90% by mass, more preferably from 20% by mass to 80% by mass, and still more preferably from 30% by mass to 70% by mass, with respect to the entire binder.

--Combination of Thermally Irreversible Gel-Forming Polysaccharide and Thermally Reversible Gel-Forming Polysaccharide--

Examples of a preferred combination of the thermally irreversible gel-forming polysaccharide and the thermally reversible gel-forming polysaccharide include a combination in which a thermally irreversible gel-forming polysaccharide is at least one selected from the group consisting of alginic acid or a salt thereof and pectin and a thermally reversible gel-forming polysaccharide is carrageenan.

-Gelation Retardant-

It is preferable that the binder contains a gelation retardant.

The gelation retardant is a compound having a function of suppressing gelation of a thermally irreversible gel-forming polysaccharide or a thermally reversible gel-forming polysaccharide.

The gelation retardant is preferably a compound having a function of suppressing gelation of a thermally irreversible gel-forming polysaccharide from the viewpoint of maintaining the shape of the meat alternative after heat cooking and the texture.

The gelation retardant is preferably a chelating agent from the viewpoint of maintaining the shape of the meat alternative after heat cooking and the texture.

As the chelating agent, a known chelating agent can be suitably used.

Examples of the chelating agent include oxycarboxylic acids such as tartaric acid, citric acid, and gluconic acid; aminocarboxylic acids such as iminodiacetic acid (IDA), nitrilotriacetic acid (NTA), and ethylenediaminetetraacetic acid (EDTA); condensed phosphoric acids such as pyrophosphoric acid and tripolyphosphoric acid; and salts thereof.

Among them, the chelating agent is preferably condensed phosphoric acid or a salt thereof, and more preferably pyrophosphoric acid or pyrophosphate, from the viewpoint of maintaining the shape of the meat alternative after heat cooking and the texture and the viewpoint of the flavor of the meat alternative.

A content of the gelation retardant is preferably from 0.1% by mass to 20% by mass, more preferably from 0.5% by mass to 15% by mass, and still from 0.3% by mass to 10% by mass, with respect to a total mass of the polysaccharide including the thermally irreversible gel-forming polysaccharide and the thermally reversible gel-forming polysaccharide.

A content of the binder contained in the lean-like portion is preferably from 0.01% by mass to 10% by mass with respect to the total mass of the lean-like portion.

-Other Additives-

It is preferable that the lean-like portion contains other additives other than a protein, oil and/or fat, and a binder, as necessary.

Examples of the other additives include water, a seasoning, an acidulant, a bittering agent, a spice, a sweetener, an antioxidant, a colorant, a color coupler, a flavor, a stabilizer, and a preservative.

A content of the other additives is preferably from 0% by mass to 20% by mass.

<Method of Producing Meat alternative>

A method of producing a meat alternative according to an embodiment of the present disclosure includes: a first step of mixing a lean-like portion precursor and a fat simulating composition to obtain a first mixture; and a second step of stretching the first mixture.

Hereinafter, an embodiment of the method of producing a meat alternative according to an embodiment of the present disclosure will be described, but the present disclosure is not limited thereto.

(First Step)

A method of mixing the lean-like portion precursor and the fat simulating composition is not particularly limited, and examples thereof include a method of mixing by hand and a method using a known mixing machine.

Examples of the mixing machine include a mixer, and attachment of the mixing machine preferably has a structure that scrapes up deposits on a wall surface.

The lean-like portion precursor can be obtained by mixing a fiber bundle-shaped textured protein and a binder.

The amount of the binder added is preferably from 1% by mass to 30% by mass, more preferably from 3% by mass to 25% by mass, and still more preferably from 5% by mass to 20% by mass, with respect to the mass of the fiber bundle-shaped textured protein swollen by moisture.

It is preferable to adjust the fiber bundle-shaped textured protein to an appropriate size before mixing the fiber bundle-shaped textured protein with the binder.

Examples of a method of adjusting a size of the fiber bundle-shaped textured protein include a method of tearing the fiber bundle-shaped textured protein, a method of cutting the fiber bundle-shaped textured protein with a knife, and a method using both methods.

The size of the fiber bundle-shaped textured protein may be adjusted by crushing the protein in the vicinity of the discharge port of the extruder in the above-described (Preparation Step), or may be adjusted by crushing the protein using a meat mallet or the like after collection from the extruder.

It is preferable that the fiber bundle-shaped textured protein has a horizontal width of from 2 mm to 35 mm and a vertical width of from 35 mm to 500 mm before being mixed with the vegetable protein binder.

A thickness of the fiber bundle-shaped textured protein is not particularly limited, and is preferably appropriately adjusted according to a thickness of the fiber bundle-shaped textured protein produced by an extruder or the like. The horizontal width of the fiber bundle-shaped textured protein is preferably, for example, from 0.1 times to 2 times the horizontal width of a chunk meat-like meat alternative to be produced.

In a case in which a meat alternative to be produced contains other additives, it is preferable to mix the other additives together with the lean-like portion precursor and the like in the first step.

As the fiber bundle-shaped textured protein, the produced fiber bundle-shaped textured protein may be used, or a commercially available product may be used.

In a case in which the fiber bundle-shaped textured protein is produced, it is preferable to produce a fiber bundle-shaped textured protein by extruding a raw material containing a vegetable protein from an extruder.

Note that extrusion conditions are preferably as follows.

In a case in which the textured protein is produced, it is preferable to produce a textured protein by extruding a raw material containing a vegetable protein from an extruder.

Note that extrusion conditions are preferably as follows.

· Raw Material Containing Vegetable Protein

As the raw material containing a vegetable protein, at least a vegetable protein is contained, and it is preferable to contain water from the viewpoint of improving extraction efficiency.

A content of the water is preferably from 2 parts by mass to 30 parts by mass with respect to 10 parts by mass of the protein.

· Extrusion Conditions

The extruder is not particularly limited, and a known single screw extruder, non-intermeshing counter-rotating twin screw extruder, intermeshing counter-rotating twin screw extruder, and intermeshing co-counter rotating twin screw extruder can be used.

As for a barrel temperature of the extruder, a temperature of a barrel front half portion (a portion from a raw material supply unit to the center of the barrel) is preferably from 60°C to 100°C, a temperature of the center of the barrel (an axial length center of the barrel) is preferably from 90°C to 170°C, and a temperature of a barrel rear half portion (a portion from the center of the barrel to the tip of the barrel) is preferably from 140°C to 180°C.

It is preferable that the extruder has a die attached to the tip of the barrel.

The die is preferably a die from which a sheet-like extrudate is obtained.

A gap (lip clearance) of a discharge port of the die is preferably from 1 mm to 10 mm.

A length of the die is preferably 30 mm or more.

The die may be a cooling die. The cooling die refers to, for example, a die cooled by circulation of a cooling liquid (water, glycol, or the like).

Swelling of the extruded raw material is easily suppressed by using the cooling die. Therefore, the textured protein extruded using the cooling die tends to be fibrous.

In a case in which the cooling die is used, a temperature of the discharge port of the cooling die is preferably from 90°C to 120°C.

In a case in which a commercially available textured protein is used, as the fiber bundle-shaped textured protein, What the cluck manufactured by The Vegetarian Butcher Japan Inc., APEX 1000 manufactured by FUJI OIL CO., LTD., and the like can be used.

(Second Step)

The second step is a step of stretching the first mixture.

In a case in which the first mixture contains a fiber bundle-shaped textured protein, it is preferable to obtain a post-stretched mixture in which a fiber axis direction of the fiber bundle-shaped textured protein is oriented in one direction by stretching the first mixture obtained in the first step.

The fiber axis direction of the fiber bundle-shaped textured protein means an orientation of a longitudinal direction of fibers forming the muscle-like texture.

The case in which "the fiber axis direction of the fiber bundle-shaped textured protein is oriented in one direction" includes a case in which the fiber axis directions of the fiber bundle-shaped textured proteins are completely the same and a case in which the fiber axis directions of the fiber bundle-shaped textured proteins are different but are oriented in a certain direction.

The second step is preferably a step of stretching the first mixture to obtain a post-stretched mixture in which a degree of orientation (hereinafter, also simply referred to as "specific degree of orientation) of the fiber direction of the fiber bundle-shaped textured protein in a cross section along a stretching direction is 1.1 or more.

From the viewpoint of the degree of orientation, the method of stretching the first mixture is preferably any one of:

(i) a method of stretching the first mixture in a direction perpendicular to a plane including a rotation axis of a set of rollers by passing the mixture through a region surrounded by the set of rollers in the direction perpendicular to the plane including the rotation axis of the set of rollers and pressing the mixture by the rollers;

(ii) a method of stretching the first mixture in a direction parallel to a rotation axis of a set of rollers by sandwiching the mixture between the set of rollers having parallel rotation axes and rotating in the same direction and pressing the first mixture by reducing a distance between the rollers while rotating the mixture;

(iii) a method of stretching the first mixture by gripping and pulling a surface of the first mixture; and

(iv) a method of stretching the first mixture by pressing the first mixture with a plate.

A stretch ratio of the first mixture is preferably 2 times or more, more preferably 4 times or more, and still more preferably 6 times or more.

The stretch ratio is a value obtained by dividing the length of the post-stretched mixture in the stretching direction by the length of the first mixture in the stretching direction.

Note that the stretching direction refers to a direction in which the first mixture is stretched in the second step.

(Third Step)

The method of producing a meat alternative according to an embodiment of the present disclosure preferably further includes, after the second step, a third step of molding the post-stretched mixture to obtain a molded product, and then heating and curing the molded product.

In a case in which the binder contains a thermally irreversible gel-forming polysaccharide, formation of a gel containing a thermally irreversible gel-forming polysaccharide is promoted by heating the molded product. As a result, the molded product is cured, and the shape of the chunk meat-like meat alternative is more easily maintained.

The shape of the molded product is preferably a shape similar to, for example, steak meat or meat for stewing.

A method of molding the post-stretched mixture is not particularly limited, examples thereof include a method of cutting the post-stretched mixture and a method of deforming the post-stretched mixture by applying an external force, and from the viewpoint of the texture, a method of cutting the post-stretched mixture is preferable.

In a case in which the post-stretched mixture is cut, it is preferable to cut the post-stretched mixture in a direction orthogonal to the fiber axis direction of the textured protein contained in the post-stretched mixture.

In a case in which the post-stretched mixture is cut, it is preferable to cut the post-stretched mixture using a knife such as a cutter or a kitchen knife.

When the molded product is obtained by molding the post-stretched mixture, the third step preferably includes a step of cutting the post-stretched mixture perpendicularly to an orientation direction of fibers, and a step of bundling a plurality of post-stretched mixtures before cutting or after cutting.

A plurality of cut post-stretched mixtures may be bundled and molded with aligned fiber directions, or a plurality of post-stretched mixtures or cut post-stretched mixtures may be bundled with aligned fiber directions, and then the bundled post-stretched mixtures or cut post-stretched mixtures may be cut and molded perpendicularly to the fiber direction.

A meat alternative having an appearance similar to that of steak of livestock meat is easily obtained by molding the post-stretched mixture so that the fiber direction is in a thickness direction of the steak.

The third step may include a step of molding the post-stretched mixture to obtain a molded product, and then forming a pattern (a marbled pattern) similar to a fat portion on a surface of the molded product for the purpose of brining an appearance of a chunk meat-like meat alternative closer to an appearance of livestock meat (hereinafter, also referred to as "fat-like portion forming step").

The fat-like portion forming step is preferably, for example, a step of forming a groove having a depth of 100 μm or more in the surface of the molded product and forming a fat-like portion by attaching an oil and/or fat to the formed groove.

Examples of a method of forming a groove in the surface of the molded product include a method of digging a surface with a knife and a method of forming a groove with a mold, and the method of forming a groove with a mold is preferable.

Subsequently, the oil and/or fat is attached to the groove formed in the surface of the molded product, and the groove is filled to form a pattern similar to that of a fat portion.

When the oil and/or fat is attached to the groove formed in the surface of the molded product, the oil and/or fat may be in a liquid state, a semi-solid state in which a liquid and a solid are mixed, or a solid state, and the liquid state or the semi-solid state is preferable.

When the oil and/or fat is attached to the groove formed in the surface of the molded product, the oil and/or fat may be attached in an emulsion state.

In the case in which the oil and/or fat is attached in the form of an emulsion, it is preferable that an emulsion containing a gelling agent, an oil and/or fat, and water (referred to as "gelling emulsifier") is attached to the groove formed in the surface of the molded product, and then the gelling emulsion attached to the groove is gelled.

The gelling emulsion is preferably an oil-in-water emulsion.

An oil drop diameter of the oil and/or fat in the gelling emulsion is preferably from 10 μm to 500 μm, more preferably from 30 μm to 400 μm, and still more preferably from 50 μm to 300 μm.

Examples of a method of gelling the gelling emulsion attached to the groove include a method of gelling the molded product in which the gelling emulsion is attached to the groove by charging the molded product into an aqueous solution containing a gelling accelerator.

A method of heating the molded product is not particularly limited, and examples thereof include wet heating (a heating method using water as a heat resource), dry heating (a heating method using a material other than water such as metal or gas as a heat resource), and dielectric heating.

In the case of producing a raw meat-like appearance, from the viewpoint of heat resistance of a colorant, it is preferable that the molded product is uniformly and quickly heated by a wet heating method after vacuum pouch of the molded product.

Examples of the wet heating include a steaming method and a method of boiling water, and the wet heating is preferably a method of boiling water because the molded product can be uniformly and quickly treated.

As for a heating temperature of the molded product, for example, the temperature inside the molded product is preferably from 70°C to 100°C.

The temperature inside the molded product is a value measured by a thermometer.

As the thermometer, for example, a data logger (TR-W550) manufactured by KEYENCE CORPORATION can be used. The internal temperature of the molded product can be measured by inserting a thermocouple into the chunk meat-like meat alternative during the vacuum pouch.

It is preferable that the meat alternative is produced through the above steps.

[Examples]

Hereinafter, Examples will be described, but the invention is not limited to these Examples. Note that, in the following description, unless otherwise specified, "part" and "%" are all on a mass basis.

<Example 1>

(1) Droplet Forming Step

An aqueous phase and an oil phase were prepared as follows.

Aqueous phase: 99.5 parts by mass of tap water and 0.5 parts by mass of RYOTO SUGAR ESTER M-1695 (manufactured by Mitsubishi Chemical Corporation) as a surfactant were weighed to a total of 5 kg, and the weighed materials were stirred using THREE-ONE MOTOR (manufactured by Shinto Scientific Co., Ltd.) for 30 minutes to be completely dissolved.

Oil phase: 1 kg of coconut oil (manufactured by ALCAPIA Corp., product name: PIACOCONA, vegetable oil, melting point: 23.5°C) as an oil and/or fat was weighed.

Membrane emulsification was performed using a pipe-shaped SPG membrane (manufactured by SPG Technology Co., Ltd., pore diameter of 50 μm) with an aqueous phase as a continuous phase and an oil phase as a dispersed phase. Specifically, the pipe-shaped SPG membrane was inserted and disposed in a tubular container, and from one end to the other end of the container, the aqueous phase was allowed to flow at a flow rate of 50 mL/min inside the pipe-shaped SPG membrane (inner conduit), and the oil phase was allowed to flow at a flow rate of 10 mL/min outside the pipe-shaped SPG membrane (outer conduit (flow path between the container and the SPG membrane)).

As a result, an aqueous solution containing droplets containing an oil and/or fat (hereinafter, also referred to as "droplet dispersion") was obtained.

The particle diameter of the droplets containing an oil and/or fat (that is, a volume average particle diameter of the oil phase) was 215 μm.

The measurement of the volume average particle diameter of the oil phase was the same as the measurement of the volume average particle diameter described above. The same measurement was performed in Examples 2 to 4 and Comparative Examples 1 and 2.

(2) Oil and/or fat Solidifying Step

The droplet dispersion was added to a separatory funnel and then allowed to stand for 30 minutes. Since the droplet dispersion was separated into a phase containing droplets containing an oil and/or fat and an aqueous phase, the aqueous phase was discharged from the separatory funnel, and the phase containing the droplets containing an oil and/or fat was collected.

The collected containing the droplet containing an oil and/or fat was cooled with stirring in a refrigerator having an internal temperature of 5°C for 1 hour, and solidification of the oil and/or fat was performed, thereby obtaining an aqueous solution containing particles (hereinafter, also referred to as "particle-containing liquid").

(3) Crosslinking Step

1 part by mass of sodium alginate (KIMICA ALGIN I-1, manufactured by KIMICA Corporation) as an edible ionically crosslinkable polymer (a non-animal-derived edible resin), 0.5 parts by mass of RYOTO SUGAR ESTER M-1695 (manufactured by Mitsubishi Chemical Corporation) as a surfactant, and 98.5 parts by mass of tap water were mixed to obtain an aqueous solution containing an edible ionically crosslinkable polymer (hereinafter, also referred to as "ionically crosslinkable polymer solution").

100 parts by mass of the particle-containing liquid was added to 100 parts by mass of the ionically crosslinkable polymer solution, the mixture was slowly stirred with a stirrer (THREE-ONE MOTOR, manufactured by Yamato Scientific Co., Ltd.), and the obtained solution (referred to as "particle-containing liquid 2) was poured into a stainless steel vat so that a thickness of the solution was 3 mm.

1 part by mass of calcium chloride (food additive grade, specific additive, manufactured by FUJIFILM Wako Pure Chemical Corporation) as a salt containing a cation was dissolved in 99 parts by mass of tap water to prepare an aqueous solution containing a cation. The aqueous solution containing the same mass of the cation as the particle-containing liquid 2 contained in the stainless vat was poured into the stainless vat, and the mixed solution was allowed to stand in a refrigerator having an internal temperature of 5°C for 2 hours to crosslink (gel) the edible ionically crosslinkable polymer, thereby obtaining a crude fat simulating composition.

(4) Heating Step

After the crude fat simulating composition obtained as described above was washed with tap water, the washed crude fat simulating composition was placed in a sealed bag with a fastener (ZIPLOC, manufactured by Asahi Kasei Corporation) and was heated in boiling water at 80°C for 5 minutes.

At this time, dehydration occurred from the crude fat simulating composition, and a part of moisture was filtered out.

Thereafter, the filtered moisture was wiped off with KIM TOWEL (registered trademark, manufactured by NIPPON PAPER CRECIA CO., LTD.) to obtain a fat simulating composition.

<Examples 2 to 4>

Fat simulating compositions of Examples 2, 3, and 4 were obtained in the same manner as that of Example 1, except that, in (4) Heating Step, the compositions were heated and dried in a dry oven (DG400, manufactured by Yamato Scientific Co., Ltd.) at 80°C for 1 hour (Example 2), 2 hours (Example 3), or 4 hours (Example 4) after heating in boiling water at 80°C for 5 hours.

<Example 5 and 6>

Fat simulating compositions of Examples 5 and 6 were obtained in the same manner as that of Example 1, except that, in (4) Heating Step, the amount of sodium alginate (KIMICA ALGIN I-1, manufactured by KIMICA Corporation) added as an edible ionically crosslinkable polymer was changed to 2 parts by mass (Example 5) or 4 parts by mass (Example 6).

<Example 7>

An aqueous solution containing an edible ionically crosslinkable polymer (hereinafter, also referred to as "ionically crosslinkable polymer solution") was obtained by adding 14.3 parts by mass of reduced starch syrup (OLIGOTOSE H-70, solid content concentration of 70% by mass, specific additive, manufactured by Mitsubishi Chemical Corporation) to 1 part by mass of sodium alginate (KIMICA ALGIN I-1, manufactured by KIMICA Corporation) as an edible ionically crosslinkable polymer and 0.5 parts by mass of RYOTO SUGAR ESTER M-1695 (manufactured by Mitsubishi Chemical Corporation) as a surfactant, and mixing 84.2 parts by mass of tap water in (3) Crosslinking Step.

Furthermore, 14.3 parts by mass of reduced starch syrup (OLIGOTOSE H-70, solid content concentration of 70% by mass, manufactured by Mitsubishi Chemical Corporation) was added to 1 part by mass of calcium chloride (food additive grade, manufactured by FUJIFILM Wako Pure Chemical Corporation) as a salt containing a cation, and the mixture was dissolved in 84.7 parts by mass of tap water, thereby preparing an aqueous solution containing a cation.

A fat simulating composition of Example 7 was obtained in the same manner as that of Example 1 except for the above.

<Examples 8 and 9>

Fat simulating compositions of Examples 8 and 9 were obtained in the same manner as that of Example 7, except that the amount of reduced starch syrup added in the aqueous solution containing an edible ionically crosslinkable polymer and the aqueous solution containing a cation was changed to 28.6 parts by mass (Example 8) and 57.1 parts by mass (Example 9) in (3) Crosslinking Step.

<Examples 10 to 13>

Fat simulating compositions of Examples 10, 11, 12, and 13 were obtained in the same manner as that of Example 3, except that the average diameter (the volume average particle diameter of the oil phase) of the obtained emulsion particles (the droplets containing an oil and/or fat) was changed as a result of changing the conditions of membrane emulsification in (1) Droplet Forming Step as follows.

Example 10: SPG membrane pore size: 50 $\mu$m, aqueous phase flow rate: 90 mL/min, oil phase flow rate: 5 mL/min

Example 11: SPG membrane pore size: 20 $\mu$m, aqueous phase flow rate: 50 mL/min, oil phase flow rate: 8 mL/min

Example 12: SPG membrane pore size: 50 $\mu$m, aqueous phase flow rate: 50 mL/min, oil phase flow rate: 20 mL/min

Example 13: SPG membrane pore size: 50 $\mu$m, aqueous phase flow rate: 50 mL/min, oil phase flow rate: 34 mL/min

<Examples 14 and 15>

Fat simulating compositions of Examples 14 and 15 were obtained in the same manner as that of Example 9, except that the oil and/or fat used as an oil phase was changed to oleic acid (fatty acid, melting point: 13.4°C, manufactured by FUJIFILM Wako Pure Chemical Corporation) from palm oil (Example 14) or olive oil (a vegetable oil, melting point: 3.0°C, manufactured by FUJIFILM Wako Pure Chemical Corporation) from palm oil (Example 15) in (1) Droplet Forming Step.

<Comparative Example 1>

A fat simulating composition of Comparative Example 1 was obtained in the same manner as that of Example 1, except that the amount of sodium alginate (KIMICAALGIN I-1, manufactured by KIMICA Corporation) used as an edible ionically crosslinkable polymer was changed to 0.5 parts by mass in (3) Crosslinking Step and heating in boiling water at 80°C for 5 minutes was not performed in (4) Heating Step.

<Comparative Example 2>

Comparative Example 2 was obtained in the same manner as that of Example 1, except that heating in boiling water was performed at 80°C for 5 minutes, and then drying was performed in a dry oven (DG400, manufactured by Yamato Scientific Co., Ltd.) at 80°C for 12 hours.

A turbidity obtained using formazine as the specific additive used in each of Examples and Comparative Examples as a standard material was 100 degrees or less. The turbidity was measured by the method described above.

Each of the fat simulating compositions obtained in Examples and Comparative Examples was in the form of a sheet having a thickness of 2 mm.

<Measurement and Evaluation>

(1) Refractive Index and Difference in Refractive Index

For the fat simulating composition obtained in each example, the "refractive index" of each of the oil phase and the aqueous phase was measured, and the "difference in refractive index" was calculated. The results are shown in Table 1.

~Refractive Index of Oil Phase~

The oil and/or fat (coconut oil, manufactured by ALCAPIA Corp., product name: PIACOCONA) used in the oil phase was used as a sample. The d-line refractive index was measured using an Abbe refractometer (digital Abbe refractometer DR-A1-Plus, manufactured by ATAGO CO., LTD.) after adjusting the temperature of the sample to 25°C and confirming that the sample became completely liquid.

~Refractive Index of Aqueous Phase~

An aqueous solution containing an edible ionically crosslinkable polymer (hereinafter, referred to as an aqueous solution A) and an aqueous solution containing a cation (hereinafter, referred to as an aqueous solution B) were prepared for each example.

The aqueous solution A was poured into a plastic petri dish (AXEL petri dish, φ90 mm × 20 mm, manufactured by AS ONE Corporation) so as to have a thickness of 0.5 mm. Next, after spraying the aqueous solution B onto a surface of the aqueous solution A using a hand spray (DIA SPRAYER pistol sprayer for food, manufactured by FURUPLA CO., LTD.), the aqueous solution B was further poured to a thickness of 3 mm.

The plastic petri dish containing the aqueous solution A and the aqueous solution B was allowed to stand in a refrigerator having an internal temperature of 5°C for 2 hours to crosslink the edible ionically crosslinkable polymer, thereby obtaining a sample.

The d-line refractive index was measured by adjusting the temperature of the obtained sample to 25°C using an Abbe refractometer (digital Abbe refractometer DR-A1-Plus, manufactured by ATAGO CO., LTD.).

~Difference in Refractive Index~

The measured value of the refractive index of the aqueous phase was subtracted from the measured value of the refractive index of the oil phase, and the absolute value of the calculated value was taken as the refractive index difference.

(2) Evaluation of Visibility

As the evaluation of visibility, the fat simulating composition obtained in each example was heated, and the transparency after heating and the fat simulated property after heating were visually confirmed and evaluated. The evaluation method and evaluation criteria are as follows. The results are shown in Table 1.

(2-1) Transparency

The milky white fat simulating composition (shape: sheet shape having a thickness of 2 mm) obtained in each example was placed on a hot plate and heated at 90°C for 5 minutes. The fat simulating composition after heating was visually observed, and transparency was evaluated in five grades. The evaluation criteria are shown below.

The evaluation was performed by three people, and the evaluation rank obtained by averaging the three people's evaluation points and rounding off the first decimal place was obtained as the evaluation result. The results are shown in Table 1.

Evaluation rank 4 is most preferable. Next, the evaluation rank 3 and the evaluation rank 2 are in the preferred order. The evaluation rank 1 and the evaluation rank 5 are equally unfavorable transparency.

<Evaluation Criteria>

5: The fat simulating composition has significantly high transparency.
4: The fat simulating composition is translucent.
3: The fat simulating composition is relatively transparent, but is not translucent.
2: The fat simulating composition has slight transparency.
1: The fat simulating composition has no transparency at all.

Fig. 1 illustrates photographs obtained by imaging states after heating in Example 2 (evaluation rank: 2), Example 8 (evaluation rank: 3), Comparative Example 1 (evaluation rank: 1), and Comparative Example 2 (evaluation rank: 5), respectively. Note that, in Example 8, a photograph obtained by imaging the state before heating was also illustrated in parallel for reference.

(2-2) Fat Simulation

The milky white fat simulating composition (shape: sheet shape having a thickness of 2 mm) obtained in each example was placed on a hot plate and heated at 90°C for 5 minutes. The color change of the fat simulating composition during heating and the color of the fat simulating composition after heating were visually observed, and the fat simulated property was evaluated in five grades.

The evaluation was performed by three people, and the evaluation rank obtained by averaging the three people's evaluation points and rounding off the first decimal place was obtained as the evaluation result. The results are shown in Table 1.

The evaluation criteria are shown below. The most preferred evaluation rank is 5.

<Evaluation Criteria>

5: The appearance changes to a translucent appearance similar to a fat portion of livestock meat during heating, and the fat simulating composition after heating looks like the fat portion of the livestock meat.
4: The appearance changes to a translucent appearance somewhat similar to a fat portion of livestock meat during heating, and the fat simulating composition after heating looks similar to the fat portion of the livestock meat.
3: The appearance changes to slightly transparent or relatively highly transparent during heating, and the fat simulating composition after heating barely appears to be a fat portion of livestock meat.
2: The appearance is slightly transparent or highly transparent during heating, and the fat simulating composition after heating looks different from a fat portion of livestock meat.
1: The appearance does not change to a transparent appearance even when heated, or the appearance changes to an appearance with too high transparency by heating, and the fat simulating composition after heating does not appear to be a fat portion of livestock meat at all.

(3) Evaluation of Texture

The fat simulating composition (shape: sheet shape having a thickness of 2 mm) obtained in each example was placed on a hot plate and heated at 90°C for 5 minutes. The fat simulating composition after heating was put into the mount and chewed 10 times by three evaluators, and simulated property of the fat texture was evaluated in five grades. The results are shown in Table 1.

The evaluation rank obtained by averaging the three people's evaluation points and rounding off the first decimal place was obtained as the evaluation result. The evaluation criteria are shown below. The most preferred rank is 5.

<Evaluation Criteria>

5: Oil overflows at once during chewing, and a juicy texture is significantly close to that of a fat portion of livestock meat.

4: Oil leaks out during chewing, and a juicy texture is close to that of a fat portion of livestock meat.

3: A small amount of oil leaks out during chewing, and it can be said that a juicy texture is close to that of a fat portion of livestock meat.

2: A slight amount of oil leaks out during chewing, but the texture is not juicy and is different from that of a fat portion of livestock meat.

1: Oil does not leak out during chewing, there is no juiciness at all, and the texture is completely different from that of a fat portion of livestock meat.

[Table 1]

| | Oil phase | | | | Aqueous phase | | | | | Refractive index | Heating in boiling water at 80°C for 5 minutes | 80°C drying time (hr) | Evaluation of visibility | | Evaluation of texture |
|---|---|---|---|---|---|---|---|---|---|---|---|---|---|---|---|
| | Oil phase refractive index | Volume average particle diameter (μm) | Melting point or crystallization temperature (°C) | Oil phase volume ratio (% by volume) | Na alginate concentration in aqueous solution (% by mass) | Specific additive | | Solid content concentration (% by volume) | Aqueous phase refractive index | | | | Transparency | Fat simulation | |
| | | | | | | Kind | Addition amount (% by mass) | | | | | | | | |
| Example 1 | 1.45 | 215 μm | 23.5°C | 40% | 1% | - | - | 1.2% | 1.3353 | 0.1147 | Performed | 0 hr | 2 | 3 | 4 |
| Example 2 | 1.45 | 215 μm | 23.5°C | 40% | 1% | - | - | 1.6% | 1.341 | 0.109 | Performed | 1 hr | 2 | 3 | 4 |
| Example 3 | 1.45 | 215 μm | 23.5°C | 40% | 1% | - | - | 1.8% | 1.3471 | 0.1029 | Performed | 2hr | 3 | 4 | 4 |
| Example 4 | 1.45 | 215 μm | 23.5°C | 40% | 1% | - | - | 2.1% | 1.3783 | 0.0717 | Performed | 4hr | 4 | 5 | 5 |
| Example 5 | 1.45 | 215 μm | 23.5°C | 40% | 2% | - | - | 1.3% | 1.3367 | 0.1133 | Performed | 0 hr | 2 | 3 | 4 |
| Example 6 | 1.45 | 215 μm | 23.5°C | 40% | 4% | - | - | 2.3% | 1.3416 | 0.1084 | Performed | 0 hr | 2 | 3 | 3 |
| Example 7 | 1.45 | 215 μm | 23.5°C | 40% | 1% | Reduced starch syrup | 10% | 7.7% | 1.344 | 0.106 | Performed | 0 hr | 3 | 4 | 4 |
| Example 8 | 1.45 | 215 μm | 23.5°C | 40% | 1% | Reduced starch syrup | 20% | 15.3% | 1.354 | 0.096 | Performed | 0 hr | 3 | 4 | 4 |
| Example 9 | 1.45 | 215 μm | 23.5°C | 40% | 1% | Reduced starch syrup | 40% | 23.0% | 1.364 | 0.086 | Performed | 0 hr | 4 | 5 | 4 |
| Example 10 | 1.45 | 113 μm | 23.5°C | 40% | 1% | - | - | 1.8% | 1.3471 | 0.1029 | Performed | 2 hr | 2 | 3 | 3 |
| Example 11 | 1.45 | 35 μm | 23.5°C | 40% | 1% | - | - | 1.8% | 1.3471 | 0.1029 | Performed | 2 hr | 1 | 2 | 2 |
| Example 12 | 1.45 | 355 μm | 23.5°C | 40% | 1% | - | - | 1.8% | 1.3471 | 0.1029 | Performed | 2 hr | 4 | 4 | 4 |
| Example 13 | 1.45 | 530 μm | 23.5°C | 40% | 1% | - | - | 1.8% | 1.3471 | 0.1029 | Performed | 2 hr | 4 | 3 | 5 |
| Example 14 | 1.46 | 195 μm | 13.4°C | 40% | 1% | Reduced starch syrup | 40% | 23.0% | 1.364 | 0.096 | Performed | 0 hr | 3 | 4 | 4 |
| Example 15 | 1.468 | 223 μm | 3.0°C | 40% | 1% | Reduced starch syrup | 40% | 23.0% | 1.364 | 0.104 | Performed | 0 hr | 3 | 4 | 4 |
| Comparative Example 1 | 1.45 | 215 μm | 23.5°C | 40% | 1% | - | - | 0.8% | 1.3328 | 0.1172 | Not performed | 0 hr | 1 | 1 | 3 |
| Comparative Example 2 | 1.45 | 215 μm | 23.5°C | 40% | 1% | - | - | 21.8% | 1.4439 | 0.0061 | Performed | 12hr | 5 | 1 | 5 |

26

In Table 1, "-" means the corresponding component is not contained.

In Table 1, the column "Oil phase volume ratio" indicates a ratio of the oil phase volume to the total volume of the fat simulating composition.

Note that calcium chloride, which is a salt containing a cation used in the crosslinking step, also remains in the aqueous phase, but the description in the column of Specific additives in Table 1 is omitted.

From the above results, it can be appreciated that in comparison with the fat simulating compositions of Comparative Examples, each of the fat simulating compositions of Examples is a fat simulating composition exhibiting a color change simulating a fat portion of livestock meat before and after heating, and exhibits a color simulating a fat portion of heated livestock meat after heating. It can be appreciated that each of the fat simulating compositions of Examples has a texture close to that of a fat portion of livestock meat in comparison with the fat simulating compositions of Comparative Examples.

<Example 16>

A meat alternative was prepared by the following procedure.

(Preparation of Raw Material of Lean-Like Portion)

Defatted soybean powder (SHOWA FRESH RF, manufactured by Showa Sangyo Co., Ltd.) as a protein and a wheat gluten (PRO-GLU 65, manufactured by THE TORIGOE CO., LTD.) as a protein were mixed at 7:3 (= defatted soybean powder: wheat gluten [mass ratio]) to obtain a mixed powder 1.

A cooling die (die width: 50 mm, lip clearance: 3 mm) having a length of 350 mm was attached to a discharge portion of a twin screw extruder set so that a screw length was 1,100 mm and a maximum temperature of a screw tip portion was 155°C, and an outlet temperature of the cooling die was stabilized at 105°C. The mixed powder 1 was introduced into an extruder at 250 g/min, and 50% by mass of water with respect to the mass of the mixed powder 1 was added to the extruder and discharged from the extruder, thereby obtaining a raw material 1 of a lean-like portion (fiberized) having a muscle-like texture in an extrusion direction.

(Preparation of Lean-Like Part)

The raw material 1 of a lean-like portion was boiled in 3 L (liter) of boiling water for 10 minutes, and water was drained.

The raw material 1 of a lean-like portion was cut to a length of 30 mm and torn along the fiber direction so as to have a width of about 5 mm. The cut raw material 1 of a lean-like portion was immersed in an aqueous solution containing SAN BEET CONC (beet juice concentrate, manufactured by San-Ei Gen F.F.I. Inc.) as a colorant (concentration; 3% by mass of the colorant with respect to the entire aqueous solution) to be colored red, the colored raw material was taken out, and water was drained. Salt, pepper, and HAIMI (a seasoning, manufactured by Ajinomoto Co., Inc.) were added as seasonings and kneaded to obtain a strip-shaped fibrous soybean protein 1.

Thereafter, 15 g of GENUTINE 310-C (carrageenan, manufactured by Sansho Co., Ltd.) and 15 g of ALGINIC ACID 429S (sodium alginate containing a curing agent, manufactured by KIMICA Corporation) as binders and 60 g of water were added to 300 g of the strip-shaped fibrous soybean protein 1, and the mixture was uniformly mixed, thereby obtaining a lean-like portion precursor A.

Thereafter, 30 g of the fat mass composition produced in Example 1 was added to the lean-like portion precursor A, and the mixture was uniformly mixed, thereby obtaining a steak meat alternative precursor A (first mixture).

Thereafter, the steak meat alternative precursor A was stretched to a length of 6 times or more using a hand-made noodle finishing machine (Handmade finisher, manufactured FUKUI KOUSAKUSHO Ltd.). The stretched steak meat alternative precursor A (mixture after molding) was put into a lamination bag (ZIPLOC, manufactured by Asahi Kasei Corporation), and was fixed by being allowed to stand at 75°C for 5 minutes. In a direction perpendicular to the stretching direction of the steak meat alternative precursor A, the steak meat alternative precursor A was cut to a thickness of 25 mm to obtain a steak meat alternative.

The disclosure of Japanese Patent Application No. 2022-158789 filed on September 30, 2022 is incorporated herein by reference in their entirety.

All publications, patent applications, and technical standards mentioned in this specification are incorporated herein by reference to the same extent as if each individual publication, patent application, or technical standard was specifically and individually indicated to be incorporated by reference.

**Claims**

1. A fat simulating composition comprising an aqueous phase and an oil phase dispersed in the aqueous phase,

   wherein a melting point or a crystallization temperature of the oil phase is in a range of from -20°C to 60°C, and wherein an absolute value of a difference between a d-line refractive index of the aqueous phase and a d-line refractive index of the oil phase satisfies a relationship of 0.01 ≤ |oil phase refractive index - aqueous phase refractive index| ≤ 0.115.

2. The fat simulating composition according to claim 1, wherein the oil phase contain an oil and/or fat derived from vegetable.

3. The fat simulating composition according to claim 1, wherein a solid content concentration of the aqueous phase is 10% by volume or more.

4. The fat simulating composition according to claim 1, wherein the aqueous phase contains at least one selected from a non-animal-derived edible resin, a protein, or a carbohydrate.

5. The fat simulating composition according to claim 1, wherein the aqueous phase contains at least one selected from edible additives having a solubility in water at 25°C of 1% by mass or more.

6. The fat simulating composition according to claim 5, wherein the aqueous phase contains reduced starch syrup as the edible additive.

7. The fat simulating composition according to claim 1, wherein the oil phase is a granular material having a volume average particle diameter of 10 μm to 500 μm.

8. The fat simulating composition according to claim 1, wherein the d-line refractive index of the aqueous phase is smaller than the d-line refractive index of the oil phase.

9. The fat simulating composition according to claim 1, wherein a ratio of an oil phase volume to a total volume of the fat simulating composition is from 10% by volume to 70% by volume.

10. The fat simulating composition according to any one of claims 1 to 9, wherein the fat simulating composition is a fat simulating structure.

11. A meat alternative comprising a lean meat-like portion containing a protein, and the fat simulating composition according to claim 10.

# FIG.1

EXAMPLE 8 BEFORE HEATING

COMPARATIVE EXAMPLE 1
AFTER HEATING

EXAMPLE 2 AFTER HEATING

EXAMPLE 8 AFTER HEATING

COMPARATIVE EXAMPLE 2
AFTER HEATING

## INTERNATIONAL SEARCH REPORT

| | International application No. |
|---|---|
| | **PCT/JP2023/029984** |

| A. | CLASSIFICATION OF SUBJECT MATTER |
|---|---|

*A23L 13/00*(2016.01)i; *A23D 7/00*(2006.01)i; *A23J 3/00*(2006.01)i; *A23L 11/00*(2021.01)i
FI: A23L13/00 Z; A23D7/00; A23L11/00 Z; A23J3/00 502

According to International Patent Classification (IPC) or to both national classification and IPC

| B. | FIELDS SEARCHED |
|---|---|

Minimum documentation searched (classification system followed by classification symbols)

A23L13/00; A23D7/00; A23J3/00; A23L11/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2021-78395 A (MITSUBISHI CORPORATION LIFE SCIENCES LTD.) 27 May 2021 (2021-05-27) paragraphs [0025]-[0027], examples | 1–5, 7–11 |
| Y | | 6 |
| X | JP 2019-165737 A (IMPOSSIBLE FOODS INC.) 03 October 2019 (2019-10-03) paragraphs [0161], [0164], [0167], [0169], [0173], [0370], claim 28 | 1-5, 7-11 |
| Y | | 6 |
| X | CN 114747653 A (JIANGNAN UNIVERSITY) 15 July 2022 (2022-07-15) claims, examples, fig. 2 | 1-5, 7-11 |
| Y | | 6 |
| X | CN 113080433 A (HUAZHONG AGRICULTURAL UNIVERSITY) 09 July 2021 (2021-07-09) claims, examples | 1-5, 7-10 |
| Y | | 6 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **10 October 2023** | **24 October 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT

| International application No. |
| --- |
| **PCT/JP2023/029984** |

### C.    DOCUMENTS CONSIDERED TO BE RELEVANT

| Category* | Citation of document, with indication, where appropriate, of the relevant passages | Relevant to claim No. |
| --- | --- | --- |
| Y | JP 2010-011781 A (SAN-EI GEN F.F.I., INC.) 21 January 2010 (2010-01-21) paragraphs [0001], [0322] | 6 |

Form PCT/ISA/210 (second sheet) (January 2015)

**INTERNATIONAL SEARCH REPORT**
Information on patent family members

International application No.

**PCT/JP2023/029984**

| Patent document cited in search report | | | Publication date (day/month/year) | Patent family member(s) | Publication date (day/month/year) |
|---|---|---|---|---|---|
| JP | 2021-78395 | A | 27 May 2021 | (Family: none) | |
| JP | 2019-165737 | A | 03 October 2019 | US 2015/0305390 A1 paragraphs [0182], [0185], [0188], [0190], [0194], [0390], claim 28 WO 2013/010042 A1 EP 3895543 A1 KR 10-2015-0105441 A CN 105050414 A | |
| CN | 114747653 | A | 15 July 2022 | (Family: none) | |
| CN | 113080433 | A | 09 July 2021 | (Family: none) | |
| JP | 2010-011781 | A | 21 January 2010 | US 2011/0008502 A1 paragraphs [0001], [0482] WO 2009/005107 A1 EP 2177111 A1 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 6446473 B
- WO 2013190921 A
- JP 2022158789 A

### Non-patent literature cited in the description

- Standard Methods for the Analysis of Fats, Oils and Related Materials. Japan Oil Chemists' Society, 1996
- **HANSEN**. C. M. Hansen solubility parameteres: a user7S handbook. CEC press, 2007